# EUROPEAN PATENT APPLICATION

(11) **EP 4 838 178 A1**
(43) Date of publication of application: **11.11.2026**
(21) Application number: 24911591.6
(22) Date of filing: 28.12.2024
(51) Int. Cl.: G01C 25/00, G01C 21/16, G01C 21/08

(54) **METHOD AND APPARATUS FOR STATE ESTIMATION, AND ELECTRONIC DEVICE AND STORAGE MEDIUM**

(30) Priority: 29.12.2023 CN 202311865612
(71) Applicant: Beijing Unicorn Technology Co., Ltd., Beijing 100098 (CN)
(72) Inventor: LAI, Wenqian, Beijing 100098 (CN); GUO, Ruonan, Beijing 100098 (CN); WU, Kejian, Beijing 100098 (CN)
(74) Representative: Grünecker Patent- und Rechtsanwälte PartG mbB
(86) International application number: PCT/CN2024/143540
(87) International publication number: WO 2025/140677

(57) **Abstract**

The present disclosure provides a method and apparatus for state estimation, an electronic device and a storage medium. A specific implementation solution is as follows: obtaining a state vector, first data collected by a first inertial measurement unit provided on a first device, and second data collected by a second inertial measurement unit provided on a second device, wherein the state vector includes: a target parameter, a relative position and a relative attitude between the second device and the first device, an angular velocity bias and an acceleration bias of the first inertial measurement unit, and an angular velocity bias and an acceleration bias of the second inertial measurement unit; and the target parameter includes at least one of the following two: a relative velocity between the second device and the first device, and a projection result obtained by projecting the relative velocity between the second device and the first device in an inertial coordinate system to a reference coordinate system; obtaining a state estimation equation that meets a predetermined lever-arm constraint condition; and determining an estimated state vector based on the state vector, the first data, the second data and the state estimation equation.

## Description

The present disclosure claims priority to Chinese Patent Application No. CN202311865612.2, filed with the China National Intellectual Property Administration on December 29, 2023, and entitled "Method and Apparatus for State Estimation, Electronic Device and Storage Medium", which is incorporated herein by reference in its entirety.

### TECHNICAL FIELD

The present disclosure relates to the technical field of relative positioning, and in particular, to a method and apparatus for state estimation, an electronic device and a storage medium.

### BACKGROUND

In some application scenarios, two devices need to be positioned relative to each other without paying attention to respective absolute positioning of the two devices.

### SUMMARY

According to one aspect of the present disclosure, a method for state estimation is provided. The method includes: obtaining a state vector, first data collected by a first inertial measurement unit provided on a first device, and second data collected by a second inertial measurement unit provided on a second device, wherein the state vector includes: a target parameter, a relative position and a relative attitude between the second device and the first device, an angular velocity bias and an acceleration bias of the first inertial measurement unit, and an angular velocity bias and an acceleration bias of the second inertial measurement unit; and the target parameter includes at least one of the following two: a relative velocity between the second device and the first device, and a projection result obtained by projecting the relative velocity between the second device and the first device in an inertial coordinate system to a reference coordinate system, wherein the reference coordinate system is a coordinate system corresponding to one of the first inertial measurement unit and the second inertial measurement unit; obtaining a state estimation equation that meets a predetermined lever-arm constraint condition, wherein the predetermined lever-arm constraint condition is defined by at least one of a first equation and a second equation, the first equation defining the relative velocity between the second device and the first device, and the second equation defining the relative position between the second device and the first device; and determining an estimated state vector based on the state vector, the first data, the second data and the state estimation equation.

According to another aspect of the present disclosure, an apparatus for state estimation is provided. The apparatus includes: a first obtaining module configured to obtain a state vector, first data collected by a first inertial measurement unit provided on a first device, and second data collected by a second inertial measurement unit provided on a second device, wherein the state vector includes: a target parameter, a relative position and a relative attitude between the second device and the first device, an angular velocity bias and an acceleration bias of the first inertial measurement unit, and an angular velocity bias and an acceleration bias of the second inertial measurement unit; and the target parameter includes at least one of the following two: a relative velocity between the second device and the first device, and a projection result obtained by projecting the relative velocity between the second device and the first device in an inertial coordinate system to a reference coordinate system, wherein the reference coordinate system is a coordinate system corresponding to one of the first inertial measurement unit and the second inertial measurement unit; a second obtaining module configured to obtain a state estimation equation that meets a predetermined lever-arm constraint condition, wherein the predetermined lever-arm constraint condition is defined by at least one of a first equation and a second equation, the first equation defining the relative velocity between the second device and the first device, and the second equation defining the relative position between the second device and the first device; and a first determination module configured to determine an estimated state vector based on the state vector, the first data, the second data and the state estimation equation.

According to yet another aspect of the present disclosure, a computer-readable storage medium is provided. The storage medium has a computer program stored thereon, wherein the computer program is configured to execute the method for state estimation described above.

According to still another aspect of the present disclosure, an electronic device is provided. The electronic device includes: a processor; and a memory configured to store processor executable instructions, wherein the processor is configured to read the executable instructions from the memory and execute the instructions to implement the method for state estimation described above.

### BRIEF DESCRIPTION OF THE DRAWINGS

Fig. 1 is a schematic diagram of a lever arm between a first inertial measurement unit and a second inertial measurement unit in some exemplary embodiments of the present disclosure.
Fig. 2 is a schematic flowchart of a method for state estimation according to some exemplary embodiments of the present disclosure.
Fig. 3 is a schematic flowchart of a method for correcting a prior state vector according to some exemplary embodiments of the present disclosure.
Fig. 4-1 is a schematic diagram of an application scenario of some exemplary embodiments of the present disclosure.
Fig. 4-2 is a schematic diagram of an application scenarios of other exemplary embodiments of the present disclosure.
Fig. 4-3 is a schematic diagram of an application scenario of further exemplary embodiments of the present disclosure.
Fig. 5 is a schematic flowchart of a method for correcting a prior state vector according to other exemplary embodiments of the present disclosure.
Fig. 6 is a schematic flowchart of a method for determining a discrete-time error-state transition matrix according to some exemplary embodiments of the present disclosure.
Fig. 7 is a schematic flowchart of a method for correcting a prior state vector according to further exemplary embodiments of the present disclosure.
Fig. 8-1 is a schematic flowchart of a method for correcting a prior state vector according to still other exemplary embodiments of the present disclosure.
Fig. 8-2 is a schematic flowchart of a method for correcting a prior state vector according to still further exemplary embodiments of the present disclosure.
Fig. 9 is a schematic flowchart of a method for correcting an estimated state vector according to some exemplary embodiments of the present disclosure.
Fig. 10 is a schematic flowchart of a method for determining an estimated state vector according to some exemplary embodiments of the present disclosure.
Fig. 11 is a schematic structural diagram of an apparatus for state estimation according to some exemplary embodiments of the present disclosure.
Fig. 12 is a schematic diagram of modules involved in correction of a prior state vector in some exemplary embodiments of the present disclosure.
Fig. 13 is a schematic diagram of modules involved in correction of a prior state vector in other exemplary embodiments of the present disclosure.
Fig. 14-1 is a schematic diagram of modules involved in correction of a prior state vector in further exemplary embodiments of the present disclosure.
Fig. 14-2 is a schematic diagram of modules involved in correction of a prior state vector in still other exemplary embodiments of the present disclosure.
Fig. 15 is a schematic diagram of modules involved in correction of a prior state vector in still further exemplary embodiments of the present disclosure.
Fig. 16 is a schematic diagram of modules involved in correction of a prior state vector in even other exemplary embodiments of the present disclosure.
Fig. 17 is a schematic structural diagram of any one of a second determination module, a fifth determination module, a first determination sub-module and a fourth determination sub-module in some exemplary embodiments of the present disclosure.
Fig. 18 is a schematic diagram of modules involved in correction of an estimated state vector in other exemplary embodiments of the present disclosure.
Fig. 19 is a schematic structural diagram of a first determination module in some exemplary embodiments of the present disclosure.
Fig. 20 is a structural diagram of an electronic device according to some exemplary embodiments of the present disclosure.

### DETAILED DESCRIPTION

In order to explain the present disclosure, exemplary embodiments of the present disclosure will be described in detail below with reference to the accompanying drawings. Obviously, the described embodiments are only part of the embodiments of the present disclosure, but not all the embodiments. It should be understood that the present disclosure is not limited by the exemplary embodiments.

It is to be noted that unless specifically stated otherwise, the relative arrangement of components and steps, numerical expressions and numerical values set forth in these embodiments do not limit the scope of the present disclosure.

### Exemplary Overview

In some application scenarios, two devices need to be positioned relative to each other.

For example, one of the two devices may be a head-mounted display device and the other may be a mobile platform on which the head-mounted display device is located. For example, one of the two devices may be a head-mounted display device, and the other may be a companion apparatus communicatively connected to the head-mounted display device. The head-mounted display device can also be referred to as a head-mounted display (HMD) or a headset. The head-mounted display device can be presented in such forms as glasses or helmets. The head-mounted display device may include, but is not limited to, augmented reality (AR) glasses, and virtual reality (VR) glasses. The mobile platform may include, but is not limited to, a vehicle, a ship, an airplane, and a train. Through relative positioning of the head-mounted display device and the mobile platform or the companion apparatus, a relative pose between the head-mounted display device and the mobile platform or the companion apparatus may be obtained. With reference to the relative pose between the head-mounted display device and the mobile platform or the companion apparatus, processing such as rendering, adjustment, warping, and controlling may be performed on a virtual image displayed by the head-mounted display device to achieve a specific display effect, for example, a 6dof (degree of freedom) display effect.

As another example, one of the two devices may be an unmanned aerial vehicle, and the other may be a mobile platform onto which the unmanned aerial vehicle will land. Through relative positioning of the unmanned aerial vehicle and the mobile platform, a relative pose between the unmanned aerial vehicle and the mobile platform may be obtained. With reference to the relative pose between the unmanned aerial vehicle and the mobile platform, respective motion parameters of the unmanned aerial vehicle and the mobile platform may be controlled so that the unmanned aerial vehicle lands smoothly onto the mobile platform.

As yet another example, one of the two devices may be a first aircraft that flies in the air and needs to be replenished with fuel, and the other may be a second aircraft that flies in the air and is used to supply fuel. Through relative positioning of the first aircraft and the second aircraft, a relative pose between the first aircraft and the second aircraft may be obtained. With reference to the relative pose between the first aircraft and the second aircraft, respective flight parameters of the first aircraft and the second aircraft may be controlled so that the second aircraft smoothly refuels the first aircraft in the air.

Therefore, how to effectively achieve relative positioning between two devices is a problem of concern to those skilled in the art.

### Exemplary method

In order to effectively achieve relative positioning between two devices, embodiments of the present disclosure provide a method for state estimation. For ease of distinction, one of the two devices requiring state estimation may be referred to as a first device and the other as a second device below.

In some optional implementations of the present disclosure, the first device may be a mobile platform on which a head-mounted display device is located, and the second device may be the head-mounted display device.

In other optional implementations of the present disclosure, the first device may be a portable device communicatively connected to a head-mounted display device, and the second device may be the head-mounted display device. The portable device and the head-mounted display device may be used in a stationary scenario, or the portable device may be removably fixed to the mobile platform on which the head-mounted display device is located, and the portable device and the head-mounted display device are used in cooperation. The detachable fixing manner may include, but is not limited to, screw connection, snap-fit connection, and plug-in connection.

During use in a stationary scenario, the method according to the present disclosure may be used to estimate a state between the portable device and the head-mounted display device.

During use in a mobile platform scenario, since the portable device and the mobile platform are relatively fixed, as long as state estimation between the head-mounted display device and the portable device is achieved, state estimation between the head-mounted display device and the mobile platform can be achieved on this basis.

Of course, the types of the first device and the second device may also be interchanged. For example, the first device may be a head-mounted display device, and the second device may be a mobile platform.

The first device and the second device may each be provided with an inertial measurement unit (IMU). For ease of distinction, the inertial measurement unit provided on the first device may be referred to as a first inertial measurement unit, and the inertial measurement unit provided on the second device may be referred to as a second inertial measurement unit. It may be understood that each inertial measurement unit is an apparatus that uses an accelerometer and a gyroscope to measure an acceleration and an angular velocity of an object. Thus, the first inertial measurement unit may be used to measure an angular velocity and an acceleration of the first device in a world coordinate system, and the second inertial measurement unit may be used to measure an angular velocity and an acceleration of the second device in the world coordinate system.

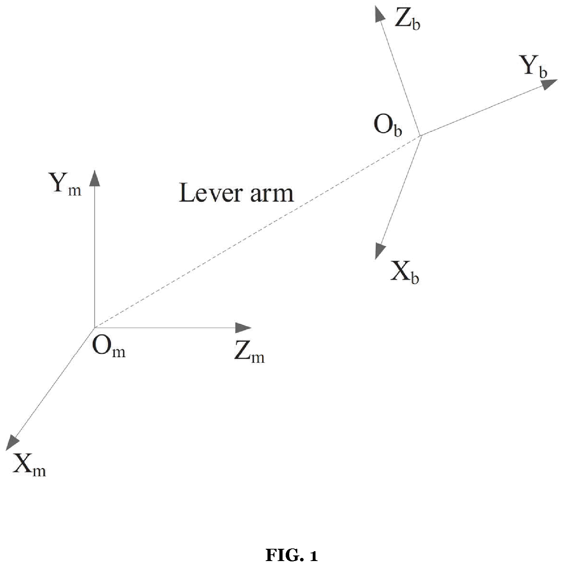

It should be noted that a system including the first device and the second device may be considered as a dual IMU system. The dual IMU system involves the first inertial measurement unit provided on the first device and the second inertial measurement unit provided on the second device. Since the first inertial measurement unit and the second inertial measurement unit cannot coincide in space, there is a lever arm between the first inertial measurement unit and the second inertial measurement unit. See Fig. 1 for details. This can cause a lever arm effect and generate a lever arm error, thereby affecting the accuracy of state estimation. For example, a distance between the first inertial measurement unit and the second inertial measurement unit is 1 meter. If the lever arm error is not processed, the lever arm error may be 1 meter.

In view of this, in embodiments of the present disclosure, a state estimation equation considering the lever arm error is provided. The state estimation equation may refer to an equation for determining a state of relative motion between the second device and the first device based on observations and measurements. A lever-arm related constraint may be introduced into the state estimation equation. Based on data respectively collected by the first inertial measurement unit and the second inertial measurement unit, and the state estimation equation, state estimation may be performed. Using the estimated state, relative positioning between the second device and the first device can be achieved. In this way, the lever arm error can be eliminated as much as possible, and the accuracy of state estimation can be improved, thereby improving the accuracy of relative positioning between the second device and the first device.

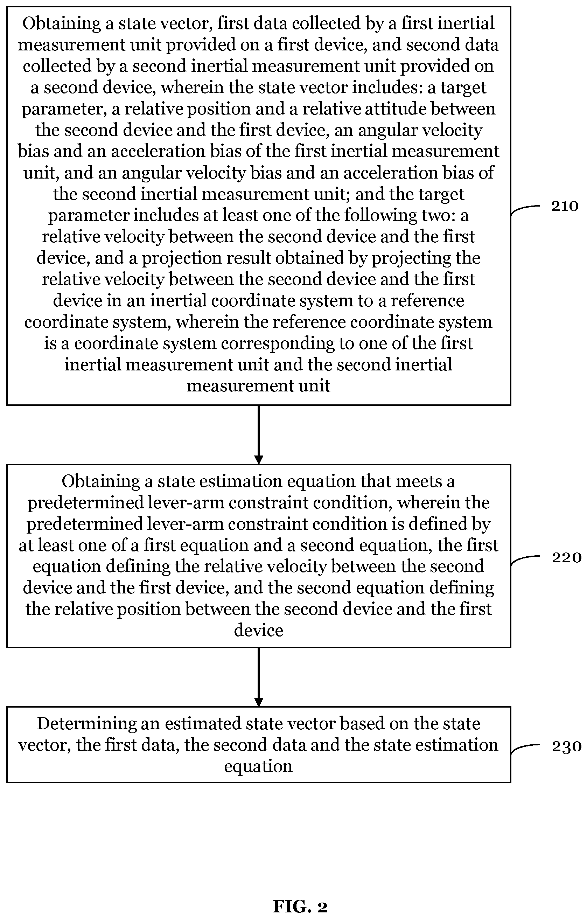

As shown in Fig. 2, a schematic flowchart of a method for state estimation according to some exemplary embodiments of the present disclosure is provided. The method shown in Fig. 2 may include steps 210, 220 and 230.

Step 210: obtaining a state vector, first data collected by a first inertial measurement unit provided on a first device, and second data collected by a second inertial measurement unit provided on a second device, wherein the state vector includes: a target parameter, a relative position and a relative attitude between the second device and the first device, an angular velocity bias and an acceleration bias of the first inertial measurement unit, and an angular velocity bias and an acceleration bias of the second inertial measurement unit; and the target parameter includes at least one of the following two: a relative velocity between the second device and the first device, and a projection result obtained by projecting the relative velocity between the second device and the first device in an inertial coordinate system to a reference coordinate system, wherein the reference coordinate system is a coordinate system corresponding to one of the first inertial measurement unit and the second inertial measurement unit.

In some optional implementations of the present disclosure, the first inertial measurement unit and the second inertial measurement unit may each have a corresponding coordinate system. A coordinate system corresponding to the first inertial measurement unit may be referred to as a first coordinate system. A coordinate system corresponding to the second inertial measurement unit may be referred to as a second coordinate system. The first coordinate system may refer to a three-dimensional coordinate system established with a center of mass of the first inertial measurement unit or another position point as an origin. The second coordinate system may refer to a three-dimensional coordinate system established with a center of mass of the second inertial measurement unit or another position point as an origin. In an optional example, the first coordinate system may be a three-dimensional coordinate system with origin Oₘ and three coordinate axes Xₘ, Yₘ, and Zₘ in Fig. 1. The second coordinate system may be a three-dimensional coordinate system with origin O_{b} and three coordinate axes X_{b}, Y_{b}, and Z_{b} in Fig. 1.

It should be noted that the reference coordinate system may be the first coordinate system or the second coordinate system. If the reference coordinate system is the first coordinate system, the relative position between the second device and the first device may be understood as a position of the second device in the first coordinate system. If the reference coordinate system is the second coordinate system, the relative position between the second device and the first device may be understood as a position of the first device in the second coordinate system. The relative velocity and the relative attitude between the second device and the first device may be understood in a similar manner and will not be described here. In addition, if the reference coordinate system is the first coordinate system, the relative velocity between the second device and the first device in the inertial coordinate system may be understood as a velocity difference between a velocity of the second device in the inertial coordinate system and a velocity of the first device in the inertial coordinate system. If the reference coordinate system is the second coordinate system, the relative velocity between the second device and the first device in the inertial coordinate system may be understood as a velocity difference between the velocity of the first device in the inertial coordinate system and the velocity of the second device in the inertial coordinate system.

In some optional implementations of the present disclosure, state estimation may be performed at certain time intervals using a state estimator. When the method of the embodiments of the present disclosure is performed, various state estimators may be used. For example, a state estimator may be a Kalman filter or another type of state estimator. If the state estimator used in the embodiments of the present disclosure is a Kalman filter, the state vector obtained in step 210 may include a current latest state vector. If the state estimator used in the embodiments of the present disclosure is another type of state estimator, the state vector obtained in step 210 may include a current latest state vector, or include a current latest state vector and a plurality of historical state vectors.

In some optional implementations of the present disclosure, the first data obtained in step 210 may include: latest angular velocity data and acceleration data that the first inertial measurement unit can obtain before current state estimation, and historical angular velocity data and historical acceleration data obtained by the first inertial measurement unit before current state estimation. For the type of the second data obtained in step 210, reference may be made to the relevant introduction of the first data, and this will not be described here.

In some optional implementations of the present disclosure, the reference coordinate system may be the first coordinate system, the relative velocity between the second device and the first device may be denoted as v, and the projection result obtained by projecting the relative velocity between the second device and the first device in the inertial coordinate system to the reference coordinate system may be denoted as v'. Herein v and v' may satisfy the following formula: $v ′ = v + {ω}_{1} \times p$ where ω₁ represents an angular velocity of the first inertial measurement unit, and p represents the relative position between the second device and the first device.

Step 220: obtaining a state estimation equation that meets a predetermined lever-arm constraint condition, wherein the predetermined lever-arm constraint condition is defined by at least one of a first equation and a second equation, the first equation defining the relative velocity between the second device and the first device, and the second equation defining the relative position between the second device and the first device.

As introduced above, there is a lever arm between the first inertial measurement unit and the second inertial measurement unit, and this can cause a lever arm effect and generate a lever arm error. The magnitude of the lever arm effect may be proportional to a target cross-product result. The target cross-product result is a result obtained by taking a cross product between the following two: an angular velocity of an inertial measurement unit corresponding to the reference coordinate system, and the relative position between the second device and the first device. Only when the angular velocity of the inertial measurement unit corresponding to the reference coordinate system is 0, or the first inertial measurement unit and the second inertial measurement unit coincide, can the lever arm effect be ignored. Obviously, the magnitude of the lever arm effect is closely associated with the relative position between the second device and the first device. It may be understood that by differentiating the relative position between the second device and the first device, the relative velocity between the second device and the first device can be obtained. Thus, it can be considered that the magnitude of the lever arm effect is also associated with the relative velocity between the second device and the first device.

In view of this, in some embodiments, the first equation defining the relative velocity between the second device and the first device may be introduced into the state estimation equation. In other embodiments, the second equation defining the relative position between the second device and the first device may be introduced. Thus, it can be considered that a lever arm-related constraint is introduced into the state estimation equation, and the state estimation equation meets the predetermined lever-arm constraint condition.

Step 230: determining an estimated state vector based on the state vector, the first data, the second data and the state estimation equation.

Taking the case where the state vector obtained in step 210 only includes the current latest state vector as an example, the estimated state vector determined in step 230 may include an estimated parameter corresponding to each parameter in the state vector obtained in step 210. For example, if the target parameter is the relative velocity between the second device and the first device, the estimated state vector determined in step 230 may include: an estimated relative position corresponding to the relative position in the state vector obtained in step 210, an estimated relative attitude corresponding to the relative attitude in the state vector obtained in step 210, an estimated relative velocity corresponding to the relative velocity in the state vector obtained in step 210, an estimated angular velocity bias corresponding to the angular velocity bias of the first inertial measurement unit in the state vector obtained in step 210, an estimated acceleration bias corresponding to the acceleration bias of the first inertial measurement unit in the state vector obtained in step 210, an estimated angular velocity bias corresponding to the angular velocity bias of the second inertial measurement unit in the state vector obtained in step 210, and an estimated acceleration bias corresponding to the acceleration bias of the second inertial measurement unit in the state vector obtained in step 210.

In some optional implementations of the present disclosure, the estimated relative position and the estimated relative attitude in the estimated state vector may be directly used as a relative positioning result between the second device and the first device, and the relative positioning result may be output.

In other optional implementations of the present disclosure, position and attitude optimization may be further performed based on the estimated relative position and the estimated relative attitude to obtain a relative positioning result between the second device and the first device, and the relative positioning result may be output.

In embodiments of the present disclosure, state estimation may be performed based on the state vector, the data collected respectively by the first inertial measurement unit and the second inertial measurement unit, and the state estimation equation that meets the predetermined lever-arm constraint condition to obtain the estimated state vector. This is equivalent to taking into account the lever arm existing between the first inertial measurement unit and the second inertial measurement unit in the process of state estimation, thereby helping eliminate the lever arm error and obtain a true relative velocity and a true relative attitude between the second device and the first device. Therefore, in the embodiments of the present disclosure, the accuracy of state estimation can be improved, thereby improving the accuracy of relative positioning between the second device and the first device.

Optionally, the estimated state vector determined in the embodiments of the present disclosure may be used as a prior state vector, or may be used as an observation used in an update (correction) process. For example, results in the estimated state vector are used as observation data to update a prior state vector. It may be understood that in some algorithms, the prior state vector may also be referred to as a predicted state vector, an initial value, or the like.

Optionally, a state vector of the state estimation equation may be expressed in the following form: $x = {\left[p {I}_{2} T {I}_{1} v {I}_{2} T {I}_{1} q {I}_{2} T {I}_{1} {b}_{{g}_{1}}^{T} {b}_{{g}_{2}}^{T} {b}_{{a}_{1}}^{T} {b}_{{a}_{2}}^{T}\right]}^{T} .$

Optionally, the state vector may be continuously maintained. When the estimated state vector determined in the embodiments of the present disclosure is used as a prior state vector, the above-described state vector may be estimated, and the above-described state vector may be used to perform subsequent required operations. When the estimated state vector determined in the embodiments of the present disclosure is used as an observation, a required state vector may be selected as observation data. When the estimated state vector determined in the embodiments of the present disclosure is used as an observation, a calculation method for a prior state vector is not limited in the present disclosure, and a prior value or initial value of the state vector defined in the present disclosure may be calculated.

In some optional implementations of the present disclosure, the first equation defines a relationship between a result of differentiating the relative velocity between the first device and the second device, and a target difference. The target difference refers to a difference obtained by subtracting a Coriolis acceleration and a convected acceleration from a reference relative acceleration. The reference relative acceleration is associated with the relative attitude between the first device and the second device, a first corrected acceleration, and a second corrected acceleration. The first corrected acceleration is a difference between an acceleration measured by the first inertial measurement unit and the acceleration bias of the first inertial measurement unit. The second corrected acceleration is a difference between an acceleration measured by the second inertial measurement unit and the acceleration bias of the second inertial measurement unit. The Coriolis acceleration is associated with a corrected angular velocity and the relative velocity between the first device and the second device. The corrected angular velocity is a difference between an angular velocity measured by an inertial measurement unit corresponding to the reference coordinate system and the angular velocity bias of the inertial measurement unit. The convected acceleration is associated with the corrected angular velocity, the relative position between the first device and the second device, and a result of differentiating the corrected angular velocity.

In an optional example, if the inertial measurement unit corresponding to the reference coordinate system is the first inertial measurement unit, that is, the reference coordinate system is the first coordinate system, then the first equation may include: $\begin{matrix}\dot{\hat{v}} {I}_{2} {I}_{1} \left(t\right) = C \left(\hat{q} {I}_{2} {I}_{1}\left(t\right)\right) \hat{a} {I}_{2} \left(t\right) - \hat{a} {I}_{1} \left(t\right) \\ - 2 \hat{ω} {I}_{1} \left(t\right) \times \hat{v} {I}_{2} {I}_{1} \left(t\right) \\ - \hat{ω} {I}_{1} \left(t\right) \times \left(\hat{ω} {I}_{1}\left(t\right)\times \hat{p} {I}_{2} {I}_{1}\left(t\right)\right) - \dot{\hat{ω}} {I}_{1} \left(t\right) \times \hat{p} {I}_{2} {I}_{1} \left(t\right)\end{matrix}$ where ^{*I*₁}**v̂**_{*I*₂}(*t*) represents the relative velocity between the second device and the first device, the symbol "·" above any parameter indicates a differentiation operation, C() indicates conversion of a parameter in () from a quaternion form to a rotation matrix form, ^{*I*1}**_{_{v̂}}**_{*I*₂}(*t*) represents the relative attitude between the second device and the first device, ^{*I*₂}**â**(*t*) represents the second corrected acceleration, ^{*I*₁}**â**(*t*) represents the first corrected acceleration, **C**(^{*I*₁}**q̂**_{*I*₂}(*t*)) ^{*I*₂}**â**(*t*) *-* ^{*I*₁}**â**(*t*) represents the reference relative acceleration, 2^{*I*₁}***ω̂***(*t*) × ^{*I*₁}**v̂**_{*I*₂}(*t*) represents the Coriolis acceleration, ^{*I*₁}***ω̂***(*t*) represents the corrected angular velocity, ^{*I*₁}***ω̂***(*t*) × (^{*I*₁}***ω̂***(*t*) × ^{*I*₁}**p̂**_{*I*₂}(*t*)) and $\dot{\hat{ω}} {I}_{1} \left(t\right) \times \hat{p} {I}_{2} {I}_{1} \left(t\right)$ may form the convected acceleration, and ^{*I*₁}**p̂**_{*I*₂}(*t*) represents the relative position between the second device and the first device.

It should be noted that the Coriolis acceleration is an acceleration that occurs when the first coordinate system and the second coordinate system are in relative motion; the Coriolis acceleration involves ^{*I*₁}***ω̂***(*t*) and ^{*I*₁}**v̂**_{*I*₂}(*t*) associated with the magnitude of the lever arm effect; the convected acceleration is an acceleration caused by motion of the reference coordinate system; and the convected acceleration involves ^{*I*₁}***ω̂***(*t*) and ^{*I*₁}**p̂**_{*I*₂}(*t*) associated with the magnitude of the lever arm effect. Therefore, a lever-arm related constraint can be effectively introduced through the first equation.

In some optional implementations of the present disclosure, if the inertial measurement unit corresponding to the reference coordinate system is the first inertial measurement unit, that is, the reference coordinate system is the first coordinate system, the second equation may include: $\dot{\hat{p}} {I}_{2} {I}_{1} \left(t\right) {=}^{{I}_{1}} \hat{v} {′}_{{I}_{2}} \left(t\right) {-}^{{I}_{1}} \hat{ω} \left(t\right) {\times }^{{I}_{1}} {\hat{p}}_{{I}_{2}} \left(t\right)$ $\dot{v} {I}_{1} {′}_{{I}_{2}} \left(t\right) = C {\left(\hat{q} {I}_{2} {I}_{1}\left(t\right)\right)}^{{I}_{2}} â \left(t\right) {-}^{{I}_{1}} â \left(t\right) {-}^{{I}_{1}} \hat{ω} \left(t\right) {\times }^{{I}_{1}} \hat{v} {′}_{{I}_{2}} \left(t\right)$ where ^{*I*₁}**v̂**'_{*I*₂}(*t*) represents the projection result obtained by projecting the relative velocity between the second device and the first device in the inertial coordinate system to the reference coordinate system. It should be noted that for the meanings of other parameters involved in the second equation, reference may be made to the relevant description of the meanings of the parameters involved in the first equation above, and these will not be described here.

It should be noted that ^{*I*₁}**v̂**'_{*I*₂}(*t*) and ^{*I*₁}**v̂**_{*I*₂}(*t*) may satisfy the following formula: $\hat{v} {I}_{1} {′}_{{I}_{2}} \left(t\right) {=}^{{I}_{1}} {\hat{v}}_{{I}_{2}} {{\left(t\right)}_{+}}^{{I}_{1}} \hat{ω} {{\left(t\right)}_{\times }}^{{I}_{1}} {\hat{p}}_{{I}_{2}} \left(t\right) .$

Based on $\dot{\hat{p}} {I}_{2} {I}_{1} \left(t\right) = \hat{v} {I}_{2} {I}_{1} \left(t\right)$ and the specific formula involved in the first equation above, the specific formula for the second equation above can be derived. Since ^{*I*₁}***ω̂***(*t*) and ^{*I*₁}**p̂**_{*I*₂}(*t*) are both related to the magnitude of the lever arm effect, a lever-arm related constraint can also be effectively introduced through the second equation.

Optionally, if the state estimation equation includes the first equation described above, then in addition to the first equation, the state estimation equation may further include the following equation: $\dot{\hat{p}} {I}_{2} {I}_{1} \left(t\right) = \hat{v} {I}_{2} {I}_{1} \left(t\right)$ $\dot{\hat{q}} {I}_{2} {I}_{1} \left(t\right) = \frac{1}{2} \left(\hat{q} {I}_{2} {I}_{1}\left(t\right){⊗}^{{I}_{2}}\overline{\hat{ω}}\left(t\right){-}^{{I}_{2}}\overline{\hat{ω}}\left(t\right){⊗}^{{I}_{1}}{\hat{q}}_{{I}_{2}}\left(t\right)\right)$ ${\dot{\hat{b}}}_{g 1} = {0}_{3 \times 1} , {\dot{\hat{b}}}_{g 2} = {0}_{3 \times 1}$ ${\dot{\hat{b}}}_{{a}_{1}} \left(t\right) = {0}_{3 \times 1} , {\dot{\hat{b}}}_{{a}_{2}} \left(t\right) = {0}_{3 \times 1} .$

Optionally, if the state estimation equation includes the second equation described above, then in addition to including the second equation, the state estimation equation may further include the following equation: $\dot{\hat{q}} {I}_{2} {I}_{1} \left(t\right) = \frac{1}{2} \left(\hat{q} {I}_{2} {I}_{1}\left(t\right){⊗}^{{I}_{2}}\overline{\hat{ω}}\left(t\right){-}^{{I}_{2}}\overline{\hat{ω}}\left(t\right){⊗}^{{I}_{1}}{\hat{q}}_{{I}_{2}}\left(t\right)\right)$ ${\dot{\hat{b}}}_{g 1} = {0}_{3 \times 1} , {\dot{\hat{b}}}_{g 2} = {0}_{3 \times 1}$ ${\dot{\hat{b}}}_{{a}_{1}} \left(t\right) = {0}_{3 \times 1} , {\dot{\hat{b}}}_{{a}_{2}} \left(t\right) = {0}_{3 \times 1} .$

Herein b̂_{*g*₁}(*t*) represents the angular velocity bias of the first inertial measurement unit, b̂_{a₁}(*t*) represents the acceleration bias of the first inertial measurement unit, b̂_{*g*₂}(*t*) represents the angular velocity bias of the second inertial measurement unit, and b̂_{a₂}(*t*) represents the acceleration bias of the second inertial measurement unit.

In the following, the estimated state vector determined in the embodiments of the present disclosure may be used as a prior state vector as an example for explanation. It may be understood that the relevant description does not mean any restriction on the estimated state vector determined in the present disclosure being used as an observation.

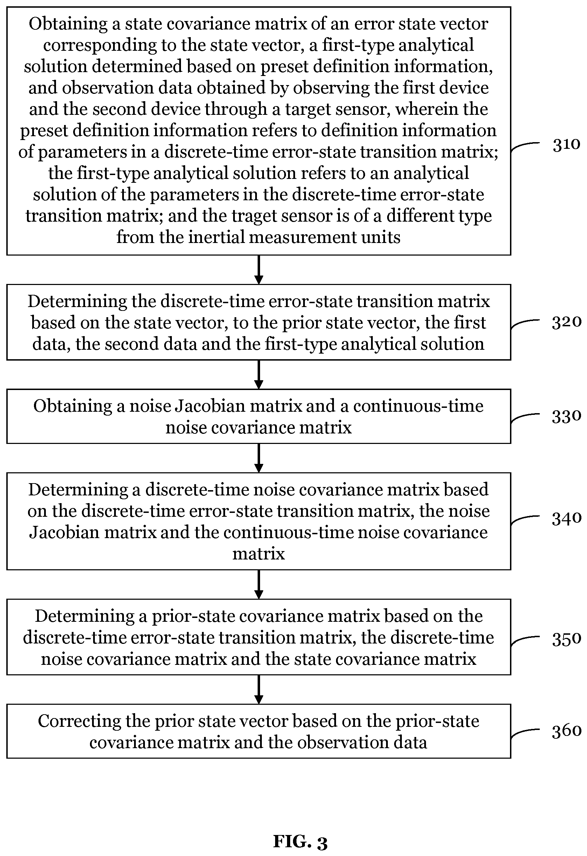

As shown in Fig. 3, a schematic flowchart of a method for correcting a prior state vector according to some exemplary embodiments of the present disclosure is provided. The method shown in Fig. 3 may include steps 310, 320, 330, 340, 350 and 360. Optionally, the method shown in Fig. 3 may be performed after step 230 of the present disclosure.

Step 310: obtaining a state covariance matrix of an error state vector corresponding to the state vector, a first-type analytical solution determined based on preset definition information, and observation data obtained by observing the first device and the second device through a target sensor, wherein the preset definition information refers to definition information of parameters in a discrete-time error-state transition matrix; the first-type analytical solution refers to an analytical solution of the parameters in the discrete-time error-state transition matrix; and the target sensor is of a different type from the inertial measurement units.

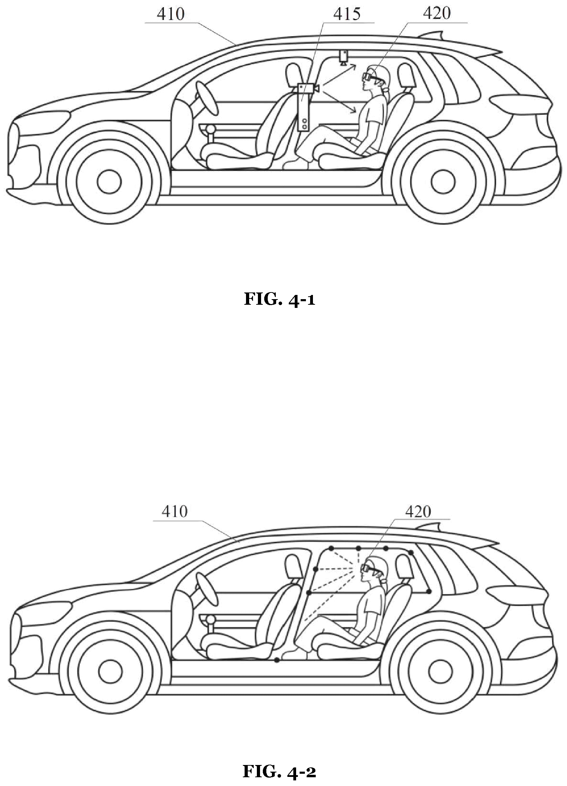

Optionally, the target sensor may be, for example, an image sensor as shown in Fig. 4-1 and Fig. 4-2.

Step 310 may also be: obtaining a state covariance matrix of an error state vector corresponding to the state vector, a first-type analytical solution determined based on preset definition information, and observation data, wherein the preset definition information refers to definition information of parameters in a discrete-time error-state transition matrix; and the first-type analytical solution refers to an analytical solution of the parameters in the discrete-time error-state transition matrix.

Taking the case where the target parameter is the relative velocity between the second device and the first device as an example, the error state vector corresponding to the state vector may be expressed in the following form: ${x}^{˜} = {\left[{p}^{˜} {I}_{2} T {I}_{1} {v}^{˜} {I}_{2} T {I}_{1} δθ {I}_{2} T {I}_{1} {{b}^{˜}}_{{g}_{1}}^{T} {{b}^{˜}}_{{g}_{2}}^{T} {{b}^{˜}}_{{a}_{1}}^{T} {{b}^{˜}}_{{a}_{2}}^{T}\right]}^{T}$ where ^{*I*₁}**p̃**_{*I*₂}, ^{*I*₁}**ṽ**_{*I*₂}, ^{*I*₁}*δθ*_{*I*₂}, b̃_{*g*₁}, b̃_{*g*₂}, b̃_{*a*₁} and b̃_{*a*₂} may sequentially represent error parameters corresponding to the relative position, the relative velocity, the relative attitude, the angular velocity bias of the first inertial measurement unit, the angular velocity bias of the second inertial measurement unit, the acceleration bias of the first inertial measurement unit, and the acceleration bias of the second inertial measurement unit in the state vector obtained in step 210. The state covariance matrix obtained in step 310 may include covariances between the error parameters in the error state vector.

In some optional implementations of the present disclosure, the analytical solution of the parameters in the discrete-time error-state transition matrix may be derived using an analytical method based on the preset definition information to obtain the first-type analytical solution. In addition, the first-type analytical solution may also be stored in a preset first storage area. In step 310, the first-type analytical solution may be obtained from the first storage area. It may be understood that an analytical solution is a concept corresponding to a numerical solution. An analytical solution may be regarded as a rigorous formula. Given any independent variable, substituting the independent variable into the formula for calculation yields a corresponding dependent variable.

Step 320: determining the discrete-time error-state transition matrix based on the state vector, the prior state vector, the first data, the second data and the first-type analytical solution.

Step 330: obtaining a noise Jacobian matrix and a continuous-time noise covariance matrix.

In some optional implementations of the present disclosure, the noise Jacobian matrix may be obtained through real-time calculation based on the state vector, the prior state vector, the first data and the second data.

In some optional implementations of the present disclosure, the continuous-time noise covariance matrix may be preset, or may need to be calculated in real time. In an optional example, the continuous-time noise covariance matrix may be determined using the following formula: ${Q}_{c} \left(t\right) = E \left[n\left(t+τ\right){n}^{T}\left(t\right)\right]$ where Q*_{c}*(*t*) represents a continuous-time noise covariance matrix at time t, E[] indicates calculating expectation of the expression in [], **n**(*t* + *τ*) represents an amount of state noise at *t* + *τ*, and **n***^{T}*(*t*) represents the transpose of an amount of state noise at time t.

Step 340: determining a discrete-time noise covariance matrix based on the discrete-time error-state transition matrix, the noise Jacobian matrix and the continuous-time noise covariance matrix.

In some optional implementations of the present disclosure, the discrete-time noise covariance matrix is denoted as **Q**_{*k,k*-1}, and the discrete-time noise covariance matrix is calculated by the following equation: ${Q}_{k , k - 1} = {\int }_{{t}_{k - 1}}^{{t}_{k}} Φ \left(τ\right) G \left(τ\right) {Q}_{c} {G}^{T} \left(τ\right) {Φ}^{T} \left(τ\right) dτ$ where **Φ**(*τ*) represents a discrete-time error-state transition matrix between time *τ* and time k-1, **G**(*τ*) represents a noise Jacobian matrix between time *τ* and time k-1, and **Q***_{c}* represents a continuous-time noise covariance matrix.

In this way, by substituting the discrete-time error-state transition matrix, the noise Jacobian matrix and the continuous-time noise covariance matrix into the above formula for calculation, the discrete-time error-state transition matrix can be obtained efficiently and reliably.

Step 350: determining a prior-state covariance matrix based on the discrete-time error-state transition matrix, the discrete-time noise covariance matrix and the state covariance matrix.

In some optional implementations of the present disclosure, based on the discrete-time error-state transition matrix, the discrete-time noise covariance matrix and the state covariance matrix, the prior-state covariance matrix may be obtained through real-time calculation. In an optional example, the discrete-time error-state transition matrix is denoted as **Φ**, the discrete-time noise covariance matrix is denoted as Q, the state covariance matrix is denoted as P, and the prior-state covariance matrix may be calculated based on the transpose of **Φ**, **P**, the transpose of **Φ**, Q, the state noise amount mentioned above, and the transpose of Q.

Step 360: correcting the prior state vector based on the prior-state covariance matrix and the observation data.

In some optional implementations of the present disclosure, the prior-state covariance matrix may be used to determine a Kalman gain, and the observation data and the Kalman gain may be used to determine a posterior error. Combining the prior state vector with the posterior error can achieve correction of the prior state vector. A correction result of the prior state vector may be used as a corrected state vector. The corrected state vector may include a correction parameter corresponding to each prior parameter in the prior state vector. That is, the corrected state vector may include a corrected relative position corresponding to a prior relative position in the prior state vector, and a corrected relative attitude corresponding to a prior relative attitude in the prior state vector. The corrected relative position and corrected relative attitude may be used as a relative positioning result between the second device and the first device. The relative positioning result may then be output. In addition, the corrected state vector may be used as a latest state vector.

In the embodiments illustrated in Fig. 3, the first-type analytical solution determined based on the preset definition information may be used to determine the discrete-time error-state transition matrix. This is beneficial to ensuring the reliability of the determined discrete-time error-state transition matrix. Next, the discrete-time noise covariance matrix and the prior-state covariance matrix may be determined in sequence, and the reliability of the prior-state covariance matrix can also be well ensured. Thus, using the prior-state covariance matrix and observation data for the correction of the prior state vector can well ensure the correction effect.

For example, referring to the method shown in Fig. 3, an error state Kalman Filter (ESKF) may be used for state estimation.

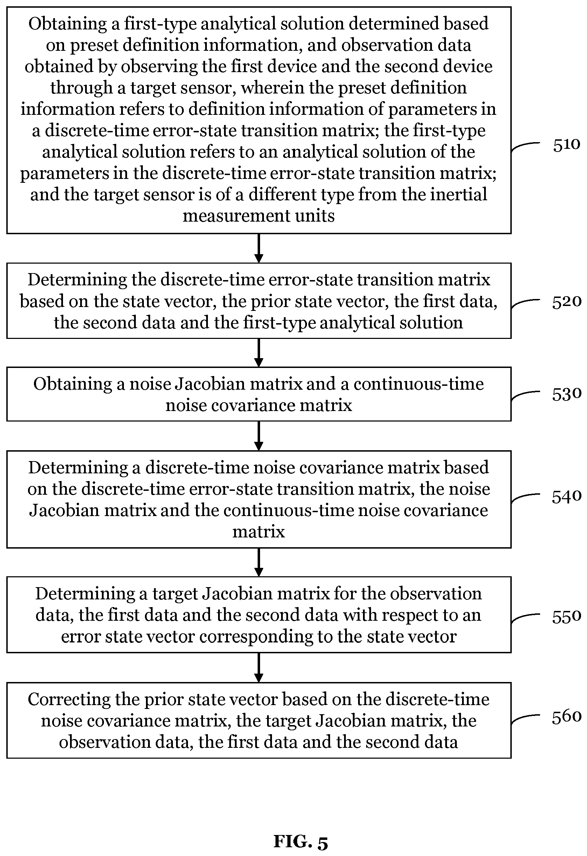

As shown in Fig. 5, a schematic flowchart of a method for correcting a prior state vector according to other exemplary embodiments of the present disclosure is provided. The method shown in Fig. 5 may include steps 510, 520, 530, 540, 550 and 560. Optionally, the method shown in Fig. 5 may be performed after step 230 of the present disclosure.

Step 510: obtaining a first-type analytical solution determined based on preset definition information, and observation data obtained by observing the first device and the second device through a target sensor, wherein the preset definition information refers to definition information of parameters in a discrete-time error-state transition matrix; the first-type analytical solution refers to an analytical solution of the parameters in the discrete-time error-state transition matrix; and the target sensor is of a different type from the inertial measurement units.

Step 510 may also be: obtaining a first-type analytical solution determined based on preset definition information, and observation data, wherein the preset definition information refers to definition information of parameters in a discrete-time error-state transition matrix; and the first-type analytical solution refers to an analytical solution of the parameters in the discrete-time error-state transition matrix.

Step 520: determining the discrete-time error-state transition matrix based on the state vector, the prior state vector, the first data, the second data and the first-type analytical solution.

Step 530: obtaining a noise Jacobian matrix and a continuous-time noise covariance matrix.

Step 540: determining a discrete-time noise covariance matrix based on the discrete-time error-state transition matrix, the noise Jacobian matrix and the continuous-time noise covariance matrix.

For example, for the specific implementation of steps 510 to 540, reference may also be made to the above relevant introduction of steps 310 to 340, and this will not be described here.

Step 550: determining a target Jacobian matrix for the observation data, the first data and the second data with respect to an error state vector corresponding to the state vector.

For example, for the specific composition of the error state vector corresponding to the state vector, reference may also be made to the relevant introduction of step 310, and this will not be described here.

In some optional implementations of the present disclosure, it is possible to determine a first Jacobian matrix for the observation data with respect to the error state vector corresponding to the state vector, determine a second Jacobian matrix for the first data with respect to the error state vector corresponding to the state vector, and determine a third Jacobian matrix for the first data with respect to the error state vector corresponding to the state vector. The target Jacobian matrix may include the first Jacobian matrix, the second Jacobian matrix, and the third Jacobian matrix. Of course, in specific implementation, the observation data, the first data and the second data may also be regarded as a whole, and a fourth Jacobian matrix for this whole with respect to the error state vector corresponding to the state vector may be calculated. The fourth Jacobian matrix may be used as the target Jacobian matrix.

Step 560: correcting the prior state vector based on the discrete-time noise covariance matrix, the target Jacobian matrix, the observation data, the first data and the second data.

In some optional implementations of the present disclosure, a posterior error may be determined based on the discrete-time noise covariance matrix, the target Jacobian matrix, the observation data, the first data and the second data, and the prior state vector may be combined with the posterior error to achieve correction of the prior state vector. A correction result of the prior state vector may be used as a corrected state vector.

Optionally, multiple correction operations may be performed in step 560. For example, it is possible to first use the observation data to correct the prior state vector to obtain a first correction result, and then use the first data and second data to correct the first correction result to obtain a second correction result. The second correction result may be used as the final corrected state vector.

In the embodiments illustrated in Fig. 5, the first-type analytical solution determined based on the preset definition information may be used to determine the discrete-time error-state transition matrix. This is beneficial to ensuring the reliability of the determined discrete-time error-state transition matrix. Next, the discrete-time noise covariance matrix and the target Jacobian matrix may be determined in sequence, and the reliability of the discrete-time noise covariance matrix and the target Jacobian matrix can also be well ensured. The discrete-time noise covariance matrix, the target Jacobian matrix, the observation data, the first data and the second data may all be used for the correction of the prior state vector. Thus, the data used for the correction of the prior state vector is very rich, for example, including both the observation data and the data collected by the inertial measurement units, which can well ensure the correction effect.

For example, referring to the method shown in Fig. 5, a state estimator other than a Kalman filter may be used for state estimation.

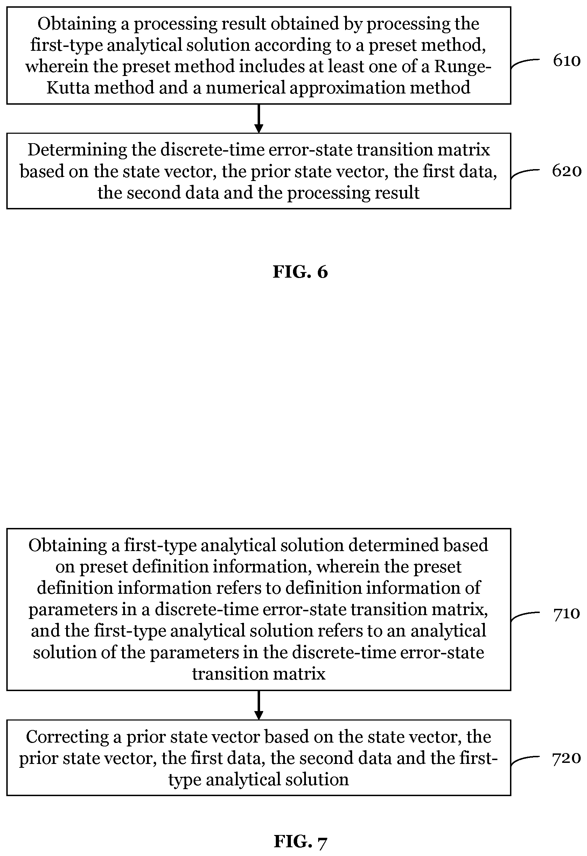

Referring to Fig. 6, a method for determining a discrete-time error-state transition matrix is introduced. The method may be used in the methods shown in Figs. 3 and 5.

As shown in Fig. 6, a schematic flowchart of a method for determining a discrete-time error-state transition matrix according to some exemplary embodiments of the present disclosure is provided. The method shown in Fig. 6 may include steps 610 and 620. Optionally, the combination of steps 610 and 620 may be used as an optional implementation of step 320 in Fig. 3. The combination of steps 610 and 620 may also be used as an optional implementation of step 520 in Fig. 5.

Step 610: obtaining a processing result obtained by processing the first-type analytical solution according to a preset method, wherein the preset method includes at least one of a Runge-Kutta method and a numerical approximation method.

In some optional implementations of the present disclosure, both the Runge-Kutta method and the numerical approximation method may be used to process angular velocity, acceleration, velocity, translation, etc. The Runge-Kutta method may include, but is not limited to, a third-order Runge-Kutta method, a fourth-order Runge-Kutta method, and a fifth-order Runge-Kutta method. It may be understood that the Runge-Kutta method is a high-precision single-step algorithm widely used in engineering. When derivative information of an equation and initial-value information are known, computer simulation technology may be utilized to avoid a complex process of solving a differential equation. The numerical approximation method may include, but is not limited to, a zero-order approximation method, a first-order approximation method, and a second-order approximation method.

The zero-order approximation method may be understood as follows. Assuming that a certain parameter needs to be integrated over a period of time, a starting value of the parameter during this period of time may be used as a zero-order approximation result, or a final value of the parameter during this period of time may be used as the zero-order approximation result, or the average of the starting value and final value of the parameter during this period of time may be used as the zero-order approximation result, or the average or weighted average of the starting value, an intermediate value, and the final value of the parameter during this period of time may be used as the zero-order approximation result.

The first-order approximation method may be understood as follows. During an integration process, angle may be processed by assuming uniform angular acceleration, acceleration may be processed by assuming uniform jerk, velocity may be processed by assuming uniform acceleration, translation may be processed by assuming uniform velocity, etc.

The second-order approximation method may be understood as follows. Assuming that a certain parameter needs to be integrated over a period of time, the integration is performed according to the formula A=a+bt+(1/2) ct2, where a, b and c represent coefficients, and t represents time. If the parameter is angular velocity, starting time of this period is t0, a may be an angular velocity at t0, b may be an angular acceleration at t0, and c may be an angular jerk at t0. Similarly, if the parameter is velocity, a may be a velocity at time t0, b may be an acceleration at time t0, and c may be a jerk at time t0.

In some optional implementations of the present disclosure, the first-type analytical solution may be processed according to a preset method to obtain a processing result. For example, in the first-type analytical solution, there are analytical solutions corresponding to multiple parameters. All the analytical solutions in the first-type analytical solution may be divided into two categories, namely high-complexity analytical solutions and low-complexity analytical solutions. Assuming that some analytical solutions only involve simple operational logic such as a single integral or addition and subtraction, the analytical solutions may be classified as low-complexity analytical solutions. Assuming that some analytical solutions involve multiple integrals or other complex operational logic, the analytical solutions may be classified as high-complexity analytical solutions. For a high-complexity analytical solution, at least one of the Runge-Kutta method and the numerical approximation method may be introduced to simplify the analytical solution to some extent to obtain a simplified result of the analytical solution. For a low-complexity analytical solution, there is no need to introduce the Runge-Kutta method and the numerical approximation method. Thus, the processing result may include: simplified results of high-complexity analytical solutions, and low-complexity analytical solutions. The processing result may be regarded as a simplified result of the first-type analytical solution. Optionally, the processing result may be stored in a preset second storage area. In step 610, the processing result may be obtained from the second storage area.

Step 620: determining the discrete-time error-state transition matrix based on the state vector, the prior state vector, the first data, the second data and the processing result.

Since the processing result may be a simplified result of the first-type analytical solution, in step 620, the state vector, the prior state vector, the first data and the second data may all be substituted into the simplified result of the first-type analytical solution for calculation, and the discrete-time error-state transition matrix can be obtained efficiently and reliably.

It should be noted that since the first-type analytical solution is a rigorous formula obtained through derivation, the first-type analytical solution can very accurately reflect operational logic required to obtain the discrete-time error-state transition matrix. By introducing at least one of the Runge-Kutta method and the numerical approximation method to process the first-type analytical solution, the first-type analytical solution can be simplified to some extent. Thus, by using the processing result obtained by processing the first-type analytical solution to determine the discrete-time error-state transition matrix, on the one hand, it can ensure the reliability of the calculated discrete-time error-state transition matrix; on the other hand, it can reduce computational complexity, increase computational speed, and improve the efficiency of obtaining the discrete-time error-state transition matrix.

Of course, the implementation of determining the discrete-time error-state transition matrix is not limited to this. For example, if the overall complexity of the first-type analytical solution is not too high, the state vector, the prior state vector, the first data and the second data may also be directly substituted into the first-type analytical solution for calculation to obtain the discrete-time error-state transition matrix.

Some exemplary embodiments of the present disclosure provide a method that uses an estimated state vector. The method may include: obtaining a first-type analytical solution determined based on preset definition information, wherein the preset definition information refers to definition information of parameters in a discrete-time error-state transition matrix, and the first-type analytical solution refers to an analytical solution of the parameters in the discrete-time error-state transition matrix.

Regarding the specific implementation manner, reference may be made to the explanation of other embodiments of the present disclosure, and this will not be described here.

The method may further include: using the estimated state vector as a prior state vector, correcting the prior state vector based on the state vector, the prior state vector, the first data, the second data and the first-type analytical solution.

The method may further include: obtaining a prior state vector, and correcting the prior state vector based on the prior state vector, the estimated state vector, the first data, the second data and the first-type analytical solution, wherein at least part of the estimated state vector is used as observation data.

As shown in Fig. 7, a schematic flowchart of a method for correcting a prior state vector according to some exemplary embodiments of the present disclosure is provided. The method shown in Fig. 7 may include steps 710 and 720. Optionally, the method shown in Fig. 7 may be performed after step 230 of the present disclosure.

Step 710: obtaining a first-type analytical solution determined based on preset definition information, wherein the preset definition information refers to definition information of parameters in a discrete-time error-state transition matrix, and the first-type analytical solution refers to an analytical solution of the parameters in the discrete-time error-state transition matrix.

For example, referring to the relevant introduction in the embodiments illustrated in Fig. 3, the analytical solution of the parameters in the discrete-time error-state transition matrix may be derived using an analytical method based on the preset definition information to obtain the first-type analytical solution.

Step 720: correcting a prior state vector based on the state vector, the prior state vector, the first data, the second data and the first-type analytical solution.

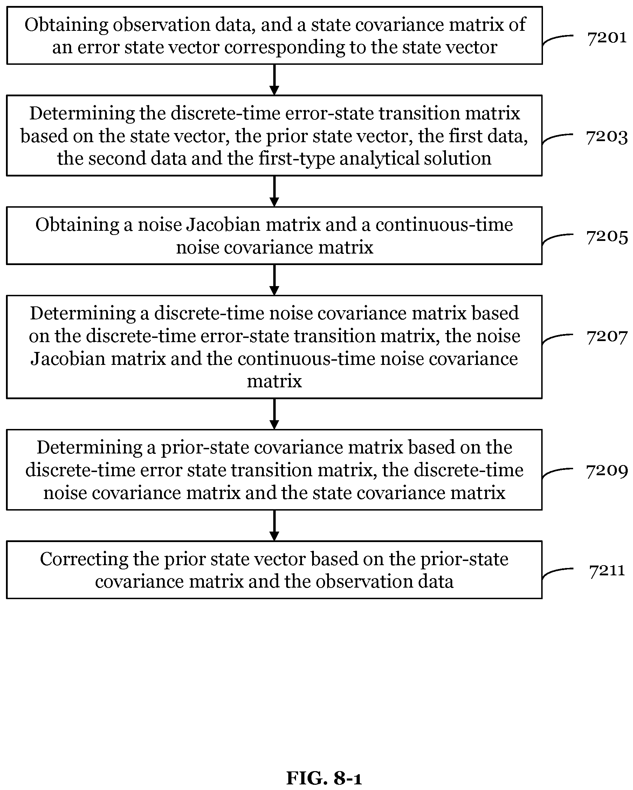

In some optional implementations of the present disclosure, as shown in Fig. 8-1, step 720 may include the following steps.

Step 7201: obtaining observation data, and a state covariance matrix of an error state vector corresponding to the state vector.

Step 7203: determining the discrete-time error-state transition matrix based on the state vector, the prior state vector, the first data, the second data and the first-type analytical solution.

Step 7205: obtaining a noise Jacobian matrix and a continuous-time noise covariance matrix.

Step 7207: determining a discrete-time noise covariance matrix based on the discrete-time error-state transition matrix, the noise Jacobian matrix and the continuous-time noise covariance matrix.

Step 7209: determining a prior-state covariance matrix based on the discrete-time error-state transition matrix, the discrete-time noise covariance matrix and the state covariance matrix.

Step 7211: correcting the prior state vector based on the prior-state covariance matrix and the observation data.

For example, for the specific implementation process and achievable effects of the implementations illustrated in Fig. 8-1, reference may be made to the above relevant introduction of the embodiments illustrated in Fig. 3, and these will not be described here.

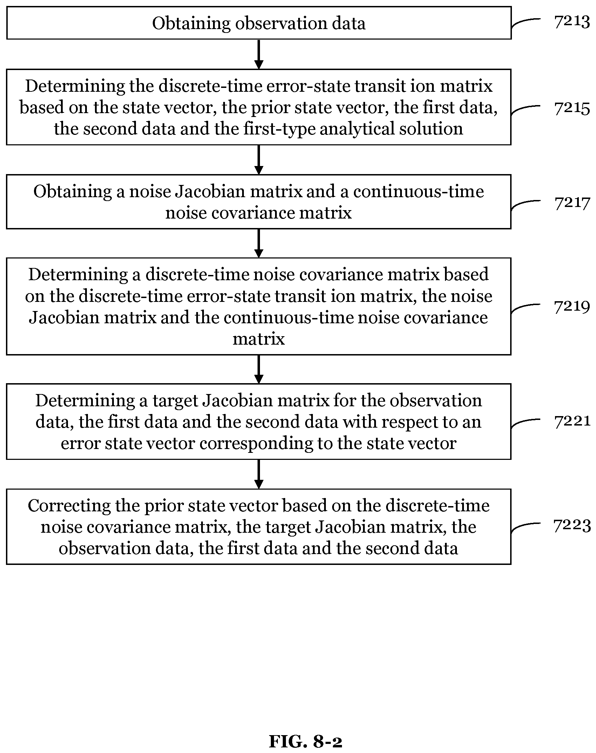

In other optional implementations of the present disclosure, as shown in Fig. 8-2, step 720 may include the following steps.

Step 7213: obtaining observation data.

Step 7215: determining the discrete-time error-state transition matrix based on the state vector, the prior state vector, the first data, the second data and the first-type analytical solution.

Step 7217: obtaining a noise Jacobian matrix and a continuous-time noise covariance matrix.

Step 7219: determining a discrete-time noise covariance matrix based on the discrete-time error-state transition matrix, the noise Jacobian matrix and the continuous-time noise covariance matrix.

Step 7221: determining a target Jacobian matrix for the observation data, the first data and the second data with respect to an error state vector corresponding to the state vector.

Step 7223: correcting the prior state vector based on the discrete-time noise covariance matrix, the target Jacobian matrix, the observation data, the first data and the second data.

For example, for the specific implementation process and achievable effects of the implementations illustrated in Fig. 8-2, reference may be made to the above relevant introduction of the embodiments illustrated in Fig. 5, and these will not be described here.

In the embodiments illustrated in Fig. 7, since the first-type analytical solution is a rigorous formula obtained through derivation, using the first-type analytical solution for the correction of the prior state vector is beneficial to ensuring the correction effect.

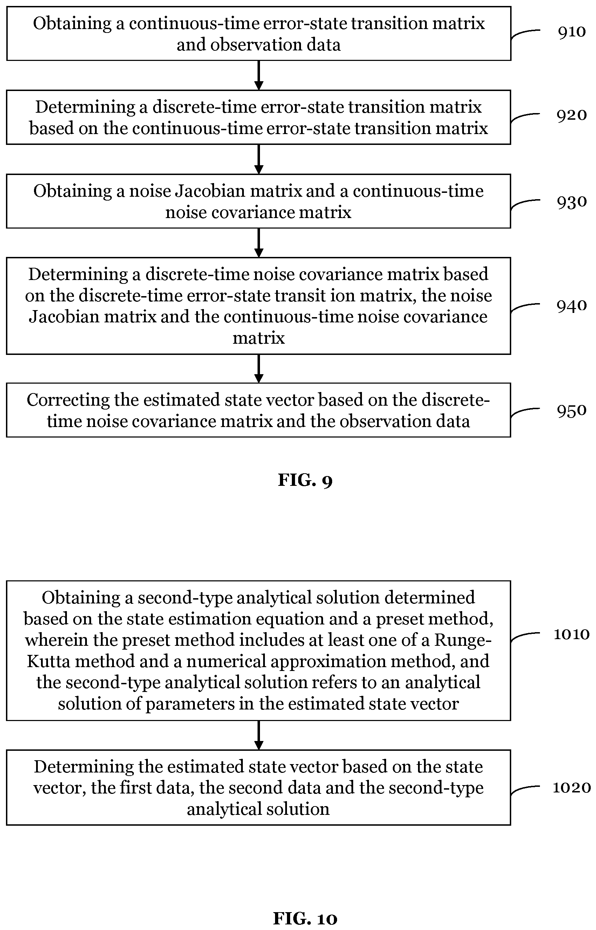

As shown in Fig. 9, a schematic flowchart of a method for correcting an estimated state vector according to some exemplary embodiments of the present disclosure is provided. The method shown in Fig. 9 may include steps 910, 920, 930, 940 and 950. Optionally, the method shown in Fig. 9 may be performed after step 230 of the present disclosure. The embodiments illustrated in Fig. 9 may be applied to various state estimation methods. For example, it may be used in the embodiments related to Fig. 3 of the present disclosure, or may be used in the embodiments related to Fig. 5 of the present disclosure, or in the cases of other state estimators.

Step 910: obtaining a continuous-time error-state transition matrix and observation data.

The continuous-time error-state transition matrix may be denoted as F. The continuous-time error-state transition matrix is calculated by the following equation: $F = \left[\begin{matrix}{0}_{3} & {I}_{3} & {0}_{3} & {0}_{3} & {0}_{3} & {0}_{3} & {0}_{3} \\ - U & - 2 \left[{\hat{ω}}_{1 \times }\right] & - \hat{C} \left[{\hat{a}}_{2 \times }\right] & - K & {0}_{3} & {I}_{3} & - \hat{C} \\ {0}_{3} & {0}_{3} & - \left[{\hat{ω}}_{2 \times }\right] & {\hat{C}}^{T} & - {I}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3}\end{matrix}\right]$ $U ≜ {\left[\hat{ω} \times {I}_{1}\right]}^{2} + \left[\dot{\hat{ω}} \times {I}_{1}\right]$ $\hat{C} ≜ C \left(\hat{q} {I}_{2} {I}_{1}\right)$ $K ≜ \left[\hat{ω} \times {I}_{1}\right] \left[\hat{p} {I}_{2 \times } {I}_{1}\right] + \left[{\left(\hat{ω} {I}_{1}{\times }^{{I}_{1}}{\hat{p}}_{{I}_{2}}+{2}^{{I}_{1}}{\hat{v}}_{{I}_{2}}\right)}_{\times }\right] .$

Herein **0**₃ represents a zero matrix, **I**₃ represents an identity matrix, [ _{×}] indicates calculating an antisymmetric matrix of a parameter in [ ], ^{*I*₁}*ω̂* represents a difference between an angular velocity measured by the first inertial measurement unit and the angular velocity bias of the first inertial measurement unit, ^{*I*₂}â represents a difference between an acceleration measured by the second inertial measurement unit and the acceleration bias of the second inertial measurement unit, and ^{*I*₂}*_{ω̂}* represents a difference between an angular velocity measured by the second inertial measurement unit and the angular velocity bias of the second inertial measurement unit.

Step 920: determining a discrete-time error-state transition matrix based on the continuous-time error-state transition matrix.

In some optional implementations of the present disclosure, based on the continuous-time error-state transition matrix, the discrete-time error-state transition matrix may be obtained through Taylor expansion. Assuming that the continuous-time error-state transition matrix is denoted as F and the discrete-time error-state transition matrix is denoted as **Φ**, the discrete-time error-state transition matrix may be determined by: $Φ = {\sum }_{k = 0}^{∞} \frac{1}{k !} {F}^{k} {Δt}^{k} = I + FΔt + \frac{1}{2} {F}^{2} {Δt}^{2} + ⋯$ wherein the number of terms retained in the Taylor expansion depends on required accuracy.

Of course, the way of determining the discrete-time error-state transition matrix is not limited to this. For example, the continuous-time error-state transition matrix and the discrete-time error-state transition matrix may be associated with each other. Assume that the discrete-time error-state transition matrix is denoted as **Φ**(*t*, *t*₀). F and **Φ**(*t*, *t*₀) can usually satisfy the following formula: $\dot{Φ} \left(t, {t}_{0}\right) = F Φ \left(t, {t}_{0}\right) .$

Then, based on the formula in the previous paragraph, an analytical solution of parameters in the discrete-time error-state transition matrix may be derived using an analytical method to obtain a first-type analytical solution. Subsequently, the discrete-time error-state transition matrix may be determined using the first-type analytical solution.

Step 930: obtaining a noise Jacobian matrix and a continuous-time noise covariance matrix.

Step 940: determining a discrete-time noise covariance matrix based on the discrete-time error-state transition matrix, the noise Jacobian matrix and the continuous-time noise covariance matrix.

For example, for the specific implementation of steps 930 and 940, reference may be made to the above relevant introduction of steps 330 and 340, and this will not be described here.

Step 950: correcting the estimated state vector based on the discrete-time noise covariance matrix and the observation data.

In some optional implementations of the present disclosure, the estimated state vector may be used as a prior state vector. Reference may be made to the introduction in the embodiments illustrated in Fig. 3. A prior-state covariance matrix is first determined based on the discrete-time error-state transition matrix, the discrete-time noise covariance matrix and the state covariance matrix, and the prior state vector is then corrected based on the prior-state covariance matrix and the observation data.

In other optional implementations of the present disclosure, the estimated state vector may be used as a prior state vector. Reference may be made to the introduction in the embodiments illustrated in Fig. 5. A target Jacobian matrix for the observation data, the first data and the second data with respect to an error state vector corresponding to the state vector is determined, and the prior state vector is corrected based on the discrete-time noise covariance matrix, the target Jacobian matrix, the observation data, the first data and the second data.

In the embodiments illustrated in Fig. 9, when the continuous-time error-state transition matrix isknown, the discrete-time error-state transition matrix may be determined based on the continuous-time error-state transition matrix. Next, the discrete-time noise covariance matrix may be determined, and the discrete-time noise covariance matrix and observation data may be used to correct the estimated state vector. In this way, the correction of the estimated state vector can be achieved without predetermining the first-type analytical solution.

In some optional implementations of the present disclosure, the observation data may include at least one of the following:
a preset observed relative position between the second device and the first device;
data obtained by observing the first device and the second device through a target sensor, the target sensor being of a different type from the inertial measurement units; and
the first data collected by the first inertial measurement unit and the second data collected by the second inertial measurement unit.

It should be noted that the case where the observation data includes at least one of the above may be applied to any scenario where a prior state vector needs to be corrected. For example, it may be applied to the method shown in Fig. 8-1, the method shown in Fig. 8-2, or the method shown in Fig. 9.

Optionally, the preset observed relative position may be a fixed value. The fixed value may be a value set in advance according to the application scenario.

For example, in the case where the first device is a mobile device communicatively connected to the second device, and a user uses the mobile device to control the second device, the preset observed relative position may be a relatively small value between 0 and 2 meters. It satisfies a possible distance between the two devices in this case.

For example, in the case where the first device is a mobile device communicatively connected to the second device, the mobile device is removably connected to a mobile platform, and the relative position and the relative attitude between the mobile device and the mobile platform are fixed, the preset observed relative position may be a relatively large value from 1 to 8 meters. It satisfies a possible distance between the two devices in this case.

In some optional implementations of the present disclosure, the target sensor may include a visual sensor, such as an image sensor, or may include a non-visual sensor. For example, the target sensor may include: a first magnetometer provided on the first device and a second magnetometer provided on the second device. Correspondingly, the observation data may include: first magnetic measurement data collected by the first magnetometer and second magnetic measurement data collected by the second magnetometer. As another example, the target sensor may include one of the following two: a first image sensor provided on the first device, and a second image sensor provided on the second device. Correspondingly, the observation data may include one of the following two: an image of the second device acquired by the first image, or an image of the first device acquired by the second device.

In an optional example, as shown in Fig. 4-1, the first device may be a portable device 415 removably fixed to a vehicle 410, and the second device may be augmented reality glasses 420 worn by a rear-seat passenger in the vehicle 410. A surface of the portable device 415 may be provided with an image sensor. The observation data may include an image of the augmented reality glasses 420 acquired by the image sensor provided on the portable device 415.

In another optional example, as shown in Fig. 4-2, the first device may be a vehicle 410, and the second device may be augmented reality glasses 420 worn by a rear-seat passenger in the vehicle. The augmented reality glasses 420 may be provided with an image sensor. The observation data may include an image acquired by the image sensor provided on the augmented reality glasses 420.

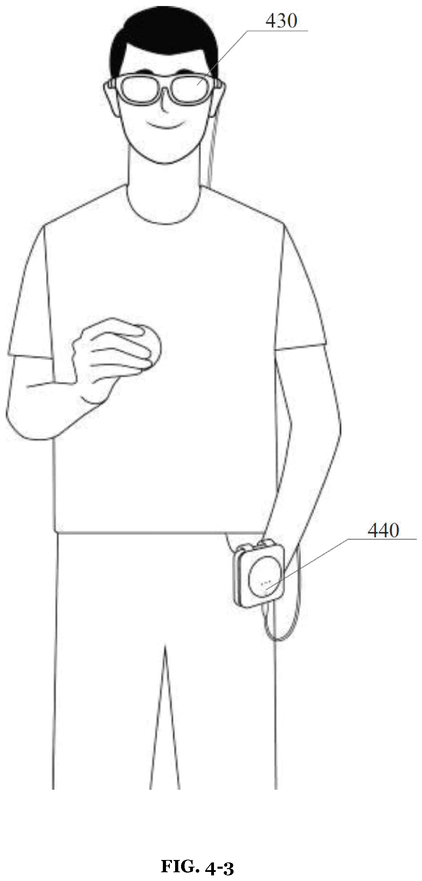

In yet another optional example, as shown in Fig. 4-3, the first device may be augmented reality glasses 430 worn by a user, and the second device may be a companion apparatus 440 communicatively connected to the augmented reality glasses 430. The augmented reality glasses 430 and the companion apparatus 440 may be respectively provided with magnetometers. The observation data may include magnetic measurement data respectively collected by the magnetometer provided on the augmented reality glasses 430 and the magnetometer provided on the companion apparatus 440.

In embodiments of the present disclosure, at least one of the preset observed relative position, the data obtained through observation by the target sensor, the first data collected by the first inertial measurement unit, and the second data collected by the second inertial measurement unit may be used for the correction of the prior state vector. In this way, a very effective reference can be provided for the correction of the prior state vector, thereby helping to ensure the correction effect.

In some optional implementations of the present disclosure, a parameter located in the i-th row and the j-th column in the discrete-time error-state transition matrix may be denoted as **Φ***ᵢⱼ*(*t*, *t*₀), and the first-type analytical solution includes at least one of the following: ${Φ}_{33} \left(t, {t}_{0}\right) = C \left(\hat{q} {I}_{2}^{{t}_{0}} {I}_{2}^{t}\right)$ ${Φ}_{34} \left(t, {t}_{0}\right) = C " \left(t\right) {\int }_{{t}_{0}}^{t} C \left(\hat{q} {I}_{2}^{s} {I}_{2}^{{t}_{0}}\right) ds$ ${Φ}_{35} \left(t, {t}_{0}\right) = - C " \left(t\right) {\int }_{{t}_{0}}^{t} C \left(\hat{q} {I}_{2}^{s} {I}_{2}^{{t}_{0}}\right) ds$ ${Φ}_{11} \left(t, {t}_{0}\right) = C ′ \left(t\right) \left(I+\left[\hat{ω} \times {I}_{1}^{{t}_{0}}\right]\left(t-{t}_{0}\right)\right)$ ${Φ}_{21} \left(t, {t}_{0}\right) = - \left[\hat{ω} \times {I}_{1}^{t}\right] C ′ \left(t\right) \left(I+\left[\hat{ω} \times {I}_{1}^{{t}_{0}}\right]\left(t-{t}_{0}\right)\right) + C ′ \left(t\right) \left[\hat{ω} \times {I}_{1}^{{t}_{0}}\right]$ ${Φ}_{12} \left(t, {t}_{0}\right) = C ′ \left(t\right) \left(t-{t}_{0}\right)$ ${Φ}_{22} \left(t, {t}_{0}\right) = - \left[\hat{ω} \times {I}_{1}^{t}\right] C ′ \left(t\right) \left(t-{t}_{0}\right) + C ′ \left(t\right)$ ${Φ}_{13} \left(t, {t}_{0}\right) = - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτds$ $\begin{matrix}{Φ}_{23} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτds \\ - C ′ \left(t\right) {\int }_{{t}_{0}}^{t} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτ\end{matrix}$ $\begin{matrix}{Φ}_{14} \left(t, {t}_{0}\right) = - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[\left(C\left(\hat{q} {I}_{2}^{τ} {I}_{1}^{τ}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτds \\ - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) K \left(τ\right) dτds\end{matrix}$ $\begin{matrix}{Φ}_{24} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[\left(C\left(\hat{q} {I}_{2}^{τ} {I}_{1}^{τ}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτds \\ + \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) K \left(τ\right) dτds \\ - C ′ \left(t\right) {\int }_{{t}_{0}}^{t} C \left(\hat{q} {I}_{1}^{τ} {I}_{1}^{{t}_{0}}\right) \left[\left(C\left(\hat{q} {I}_{1}^{τ} {I}_{1}^{{t}_{τ}}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτ - C ′ \left(t\right) {\int }_{{t}_{0}}^{t} C \left(\hat{q} {I}_{1}^{τ} {I}_{1}^{{t}_{0}}\right) K \left(τ\right) dτ\end{matrix}$ ${Φ}_{15} \left(t, {t}_{0}\right) = C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{μ} {I}_{1}^{τ}\right) dμdτds$ $\begin{matrix}{Φ}_{25} \left(t, {t}_{0}\right) = - \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{τ} {I}_{1}^{τ}\right) dμdτds \\ + C ′ \left(t\right) {\int }_{{t}_{0}}^{t} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{μ} {I}_{1}^{τ}\right) dμdτ\end{matrix}$ ${Φ}_{16} \left(t, {t}_{0}\right) = C ′ \left(t\right) {\int }_{{t}_{0}}^{t} {\int }_{{t}_{0}}^{s} C \left(\hat{q} {I}_{1}^{τ} {I}_{1}^{{t}_{0}}\right) dτ ds$ ${Φ}_{26} \left(t, {t}_{0}\right) = - \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) dτds + C ′ \left(t\right) {\int }_{{t}_{0}}^{t} C \left(\hat{q} {I}_{1}^{τ} {I}_{1}^{{t}_{0}}\right) dτ$ ${Φ}_{17} \left(t, {t}_{0}\right) = - C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτds$ ${Φ}_{27} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτds - C ′ \left(t\right) {\int }_{{t}_{0}}^{t} C \left(\hat{q} {I}_{2}^{τ} {I}_{1}^{{t}_{0}}\right) dτ ;$ ${if i = 3 , and j = 1 , 2 , 6 or 7 , then Φ}_{3 j} \left(t, {t}_{0}\right) = {0}_{3} ;$ $if i > 3 , and i \neq j , then {Φ}_{ij} \left(t ,{t}_{0}\right) = {I}_{3} ;$ and $if i > 3 , and i \neq j , then {Φ}_{ij} \left(t ,{t}_{0}\right) = {0}_{3} ,$ wherein $C " \left(t\right) = C \left(\hat{q} {I}_{2}^{{t}_{0}} {I}_{2}^{t}\right) , C ′ \left(t\right) = C \left(\hat{q} {I}_{1}^{{t}_{0}} {I}_{1}^{t}\right)$, and $K ≜ \left[\hat{ω} \times {I}_{1}\right] \left[\hat{p} {I}_{2 \times } {I}_{1}\right] + \left[{\left(\hat{ω} {I}_{1}{\times }^{{I}_{1}}{\hat{p}}_{{I}_{2}}+{2}^{{I}_{1}}{\hat{v}}_{{I}_{2}}\right)}_{\times }\right]$.

Herein $\hat{q} {I}_{2}^{{t}_{0}} {I}_{2}^{t}$ represents an attitude of the second inertial measurement unit at time *t*₀ relative to the second inertial measurement unit at time *t, t*₀ represents an initial time of error state transition, *t* represents a target time of error state transition, $\hat{q} {I}_{1}^{s} {I}_{2}^{{t}_{0}}$ represents an attitude of the first inertial measurement unit at time s relative to the second inertial measurement unit at time *t*₀, s is between *t*₀ and *t*, $\hat{q} {I}_{2}^{0} {I}_{2}^{{t}_{0}}$ represents an attitude of the second inertial measurement unit at time s relative to the second inertial measurement unit at time *t*₀, $\hat{q} {I}_{1}^{{t}_{0}} {I}_{1}^{t}$ represents an attitude of the first inertial measurement unit at time *t*₀ relative to the first inertial measurement unit at time *t,* I represents an identity matrix, [ _{×}] indicates calculating an antisymmetric matrix of a parameter in [ ], $\hat{ω} {I}_{1}^{{t}_{0}}$ represents a difference between an angular velocity at time *t*₀ measured by the first inertial measurement unit and an angular velocity bias of the first inertial measurement unit at time *t*₀, $\hat{ω} {I}_{1}^{t}$ represents a difference between an angular velocity at time *t* measured by the first inertial measurement unit and an angular velocity bias of the first inertial measurement unit at time *t,* $\hat{q} {I}_{1}^{τ} {I}_{1}^{{t}_{0}}$ represents an attitude of the first inertial measurement unit at time *τ* relative to the first inertial measurement unit at time *t*₀, $\hat{q} {I}_{2}^{τ} {I}_{1}^{τ}$ represents an attitude of the second inertial measurement unit at time *τ* relative to the first inertial measurement unit at time *τ*, $\hat{a} {I}_{2}^{τ}$ represents a difference between an acceleration measured by the second inertial measurement unit at time *τ* and an acceleration bias of the second inertial measurement unit at time *τ*, $\hat{q} {I}_{2}^{{i}_{0}} {I}_{1}^{i}$ represents an attitude of the second inertial measurement unit at time *t*₀ relative to the first inertial measurement unit at time *τ*, *τ* is between *t*₀ and s, $\hat{q} {I}_{1}^{μ} {I}_{1}^{τ}$ represents an attitude of the first inertial measurement unit at time *µ* relative to the first inertial measurement unit at time *τ*, *µ* is between *t*₀ and *τ*, $\hat{q} {I}_{2}^{μ} {I}_{1}^{i}$ represents an attitude of the second inertial measurement unit at time *µ* relative to the first inertial measurement unit at time *τ*, $\hat{q} {I}_{2}^{τ} {I}_{1}^{{t}_{0}}$ represents an attitude of the second inertial measurement unit at time *τ* relative to the first inertial measurement unit at time *t*₀, **0**₃ represents a zero matrix, and **I**₃ represents an identity matrix.

The principle of obtaining the first-type analytical solution is introduced below.

As introduced above, for example, the continuous-time error-state transition matrix may be denoted as F. F may be in the following form: $F = \left[\begin{matrix}{0}_{3} & {I}_{3} & {0}_{3} & {0}_{3} & {0}_{3} & {0}_{3} & {0}_{3} \\ - U & - 2 \left[{\hat{ω}}_{1 \times }\right] & - \hat{C} \left[{\hat{a}}_{2 \times }\right] & - K & {0}_{3} & {I}_{3} & - \hat{C} \\ {0}_{3} & {0}_{3} & - \left[{\hat{ω}}_{2 \times }\right] & {\hat{C}}^{T} & - {I}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3}\end{matrix}\right] .$

The discrete-time error-state transition matrix can be denoted as **Φ**(*t*, *t*₀). F and **Φ**(*t*, *t*₀) can satisfy the following formula: $\dot{Φ} \left(t, {t}_{0}\right) = F Φ \left(t, {t}_{0}\right) .$

The equation in the above paragraph may be used to reflect definition information of parameters in the discrete-time error-state transition matrix. That is, the equation in the above paragraph may carry preset definition information.

A parameter located in the i-th row and the j-th column in **Φ**(*t*, *t*₀) may be denoted as **Φ***ᵢⱼ*(*t*, *t*₀) or **Φ***ᵢⱼ* Next, the case where i>3 is discussed first. In this case, the following equation may be derived: ${\dot{Φ}}_{ij} \left(t, {t}_{0}\right) = {F}_{i , :} \left(t, {t}_{0}\right) {Φ}_{: , j} \left(t, {t}_{0}\right) = {0}_{3}$ ${Φ}_{ij} \left(t, {t}_{0}\right) = {Φ}_{ij} \left({t}_{0}, {t}_{0}\right) = {I}_{3} or {0}_{3} .$

Still assuming i>3, if i= j, then: ${Φ}_{ij} \left(t, {t}_{0}\right) = {Φ}_{ij} \left({t}_{0}, {t}_{0}\right) = {I}_{3} .$

Still assuming i>3, if i≠j, then: ${Φ}_{ij} \left(t, {t}_{0}\right) = {Φ}_{ij} \left({t}_{0}, {t}_{0}\right) = {0}_{3} .$

Thus, **Φ**(*t, t*₀) as a whole may be in the following matrix form: $Φ \left(t, {t}_{0}\right) = \left[\begin{matrix}{Φ}_{11} & {Φ}_{12} & {Φ}_{13} & {Φ}_{14} & {Φ}_{15} & {Φ}_{16} & {Φ}_{17} \\ {Φ}_{21} & {Φ}_{22} & {Φ}_{23} & {Φ}_{24} & {Φ}_{25} & {Φ}_{26} & {Φ}_{27} \\ {0}_{3} & {0}_{3} & {Φ}_{33} & {Φ}_{34} & {Φ}_{35} & {0}_{3} & {0}_{3} \\ {0}_{3} & {0}_{3} & {0}_{3} & {I}_{3} & {0}_{3} & {0}_{3} & {0}_{3} \\ {0}_{3} & {0}_{3} & {0}_{3} & {0}_{3} & {I}_{3} & {0}_{3} & {0}_{3} \\ {0}_{3} & {0}_{3} & {0}_{3} & {0}_{3} & {0}_{3} & {I}_{3} & {0}_{3} \\ {0}_{3} & {0}_{3} & {0}_{3} & {0}_{3} & {0}_{3} & {0}_{3} & {I}_{3}\end{matrix}\right] .$

Next, the case where i≤3 is discussed.

Optionally, **Φ**₃₁, **Φ**₃₂, **Φ**₃₆ and **Φ**₃₇ may be determined according to the following derivation process: ${\dot{Φ}}_{3 j} \left(t, {t}_{0}\right) = {F}_{3 , :} \left(t, {t}_{0}\right) {Φ}_{: , j} \left(t, {t}_{0}\right) = - \left[{\hat{ω}}_{2 \times }\right] {Φ}_{3 j} \left(t, {t}_{0}\right)$ ${Φ}_{3 j} \left({t}_{0}, {t}_{0}\right) = {0}_{3}$ ${Φ}_{3 j} \left(t, {t}_{0}\right) = {0}_{3} , j = 1 , 2 , 6 , 7 .$

Optionally, **Φ**₃₃ may be determined according to the following derivation process: $\begin{matrix}{\dot{Φ}}_{33} \left(t, {t}_{0}\right) = {F}_{3 , :} \left(t, {t}_{0}\right) {Φ}_{: , 3} \left(t, {t}_{0}\right) = \left[{0}_{3} {0}_{3} -\left[\hat{ω} \times {I}_{2}^{t}\right] C\left(\hat{q} {I}_{1}^{t} {I}_{2}^{t}\right) -{I}_{3} {0}_{3} {0}_{3}\right] \left[\begin{matrix}{Φ}_{13} \\ {Φ}_{23} \\ {Φ}_{33} \\ {0}_{3} \\ {0}_{3} \\ {0}_{3} \\ {0}_{3}\end{matrix}\right] \\ = - \left[\hat{ω} \times {I}_{2}^{t}\right] {Φ}_{33} \left(t, {t}_{0}\right) \\ {Φ}_{33} \left(t, {t}_{0}\right) = {e}^{{\int }_{{t}_{0}}^{t} - \left[\hat{ω} \times {I}_{2}^{s}\right] ds} {Φ}_{33} \left({t}_{0}, {t}_{0}\right) = C \left(\hat{q} {I}_{2}^{{t}_{0}} {I}_{2}^{t}\right) .\end{matrix}$

Optionally, **Φ**₃₄ may be determined according to the following derivation process: $\begin{matrix}{\dot{Φ}}_{34} \left(t, {t}_{0}\right) = {F}_{3 , :} \left(t, {t}_{0}\right) {Φ}_{: , 4} \left(t, {t}_{0}\right) = \left[{0}_{3} {0}_{3} -\left[\hat{ω} \times {I}_{2}^{t}\right] C\left(\hat{q} {I}_{1}^{t} {I}_{2}^{t}\right) -{I}_{3} {0}_{3} {0}_{3}\right] \left[\begin{matrix}{Φ}_{14} \\ {Φ}_{24} \\ {Φ}_{34} \\ {I}_{3} \\ {0}_{3} \\ {0}_{3} \\ {0}_{3}\end{matrix}\right] \\ = - \left[\hat{ω} \times {I}_{2}^{t}\right] {Φ}_{34} \left(t, {t}_{0}\right) + C \left(\hat{q} {I}_{1}^{t} {I}_{2}^{t}\right)\end{matrix}$ $\begin{matrix}{Φ}_{34} \left(t, {t}_{0}\right) = {e}^{{\int }_{{t}_{0}}^{t} - \left[\hat{ω} \times {I}_{2}^{s}\right] ds} {\int }_{{t}_{0}}^{t} {e}^{{\int }_{{t}_{0}}^{s} \left[\hat{ω} \times {I}_{2}^{τ}\right] dτ} C \left(\hat{q} {I}_{1}^{s} {I}_{2}^{s}\right) ds \\ = C " \left(t\right) {\int }_{{t}_{0}}^{t} C \left(\hat{q} {I}_{1}^{s} {I}_{2}^{{t}_{0}}\right) ds\end{matrix}$ $C " \left(t\right) = C \left(\hat{q} {I}_{2}^{{t}_{0}} {I}_{2}^{t}\right) .$

Optionally, **Φ**₃₅ may be determined according to the following derivation process: $\begin{matrix}{\dot{Φ}}_{35} \left(t, {t}_{0}\right) = {F}_{3 , :} \left(t, {t}_{0}\right) {Φ}_{: , 5} \left(t, {t}_{0}\right) = \left[{0}_{3} {0}_{3} -\left[\hat{ω} \times {I}_{2}^{t}\right] C\left(\hat{q} {I}_{1}^{t} {I}_{2}^{t}\right) -{I}_{3} {0}_{3} {0}_{3}\right] \left[\begin{matrix}{Φ}_{15} \\ {Φ}_{25} \\ {Φ}_{35} \\ {0}_{3} \\ {I}_{3} \\ {0}_{3} \\ {0}_{3}\end{matrix}\right] \\ = - \left[\hat{ω} \times {I}_{2}^{t}\right] {Φ}_{35} \left(t, {t}_{0}\right) - {I}_{3}\end{matrix}$ $\begin{matrix}{Φ}_{35} \left(t, {t}_{0}\right) = C " \left(t\right) {\int }_{{t}_{0}}^{t} - {e}^{{\int }_{{t}_{0}}^{s} \left[\hat{ω} \times {I}_{2}^{τ}\right] dτ} ds \\ = - C " \left(t\right) {\int }_{{t}_{0}}^{t} C \left(\hat{q} {I}_{2}^{s} {I}_{2}^{{t}_{0}}\right) ds .\end{matrix}$

Optionally, **Φ**₁₁ and **Φ**₂₁ may be determined according to the following derivation process: $\begin{matrix}{\dot{Φ}}_{21} \left(t, {t}_{0}\right) = {F}_{2 , :} \left(t, {t}_{0}\right) {Φ}_{: , 1} \left(t, {t}_{0}\right) = \left[-U\left(t\right) -2\left[\hat{ω} \times {I}_{1}^{t}\right] -C\left(\hat{q} {I}_{2}^{t} {I}_{1}^{t}\right)\left[\hat{a} \times {I}_{1}^{t}\right] -K\left(t\right) {0}_{3} {I}_{3} -C\left(\hat{q} {I}_{2}^{t} {I}_{1}^{t}\right)\right] \left[\begin{matrix}{Φ}_{11} \\ {Φ}_{21} \\ {0}_{3} \\ {0}_{3} \\ {0}_{3} \\ {0}_{3} \\ {0}_{3}\end{matrix}\right] \\ = - U \left(t\right) {Φ}_{11} \left(t, {t}_{0}\right) - 2 \left[\hat{ω} \times {I}_{1}^{t}\right] {Φ}_{21} \left(t, {t}_{0}\right)\end{matrix}$ ${\dot{Φ}}_{11} \left(t, {t}_{0}\right) = {F}_{1 , :} \left(t, {t}_{0}\right) {Φ}_{: , 1} \left(t, {t}_{0}\right) = {Φ}_{21} \left(t, {t}_{0}\right)$ ${{Φ}^{¨}}_{11} \left(t, {t}_{0}\right) + U \left(t\right) {Φ}_{11} \left(t, {t}_{0}\right) + 2 \left[\hat{ω} \times {I}_{1}^{t}\right] {\dot{Φ}}_{11} \left(t, {t}_{0}\right) = {0}_{3}$ ${Φ}_{11} \left({t}_{0}, {t}_{0}\right) = {I}_{3}$ ${Φ}_{21} \left({t}_{0}, {t}_{0}\right) = {0}_{3}$ ${Φ}_{11} \left(t, {t}_{0}\right) = {e}^{{\int }_{{t}_{0}}^{t} - \left[\hat{ω} \times {I}_{1}^{0}\right] ds} \left(I+\left[\hat{ω} \times {I}_{1}^{{t}_{0}}\right]\left(t-{t}_{0}\right)\right) = C ′ \left(t\right) \left(I+\left[\hat{ω} \times {I}_{1}^{{t}_{0}}\right]\left(t-{t}_{0}\right)\right)$ ${Φ}_{21} \left(t, {t}_{0}\right) = {\dot{Φ}}_{11} \left(t, {t}_{0}\right) = - \left[\hat{ω} \times {I}_{1}^{t}\right] C ′ \left(t\right) \left(I+\left[\hat{ω} \times {I}_{1}^{{t}_{0}}\right]\left(t-{t}_{0}\right)\right) + C ′ \left(t\right) \left[\hat{ω} \times {I}_{1}^{{t}_{0}}\right]$ $C ′ \left(t\right) = C \left(\hat{q} {I}_{1}^{{t}_{0}} {I}_{1}^{t}\right) .$

Optionally, **Φ**₁₂ and **Φ**₂₂ may be determined according to the following derivation process: $\begin{matrix}{\dot{Φ}}_{22} \left(t, {t}_{0}\right) = {F}_{2 , :} \left(t, {t}_{0}\right) {Φ}_{: , 2} \left(t, {t}_{0}\right) = \left[-U\left(t\right) -2\left[\hat{ω} \times {I}_{1}^{t}\right] -C\left(\hat{q} {I}_{2}^{t} {I}_{1}^{t}\right)\left[\hat{a} \times {I}_{1}^{t}\right] -K\left(t\right) {0}_{3} {I}_{3} -C\left(\hat{q} {I}_{2}^{t} {I}_{1}^{t}\right)\right] \left[\begin{matrix}{Φ}_{12} \\ {Φ}_{22} \\ {0}_{3} \\ {0}_{3} \\ {0}_{3} \\ {0}_{3} \\ {0}_{3}\end{matrix}\right] \\ = - U \left(t\right) {Φ}_{12} \left(t, {t}_{0}\right) - 2 \left[\hat{ω} \times {I}_{1}^{t}\right] {Φ}_{22} \left(t, {t}_{0}\right)\end{matrix}$ ${\dot{Φ}}_{12} \left(t, {t}_{0}\right) = {F}_{1 , :} \left(t, {t}_{0}\right) {Φ}_{: , 2} \left(t, {t}_{0}\right) = {Φ}_{22} \left(t, {t}_{0}\right)$ ${{Φ}^{¨}}_{12} \left(t, {t}_{0}\right) + U \left(t\right) {Φ}_{12} \left(t, {t}_{0}\right) + 2 \left[\hat{ω} \times {I}_{1}^{t}\right] {\dot{Φ}}_{12} \left(t, {t}_{0}\right) = {0}_{3}$ ${Φ}_{12} \left({t}_{0}\right) = {0}_{3}$ ${Φ}_{22} \left({t}_{0}\right) = {I}_{3}$ ${Φ}_{12} = C ′ \left(t\right) \left(t-{t}_{0}\right)$ ${Φ}_{22} = - \left[\hat{ω} \times {I}_{1}^{t}\right] C ′ \left(t\right) \left(t-{t}_{0}\right) + C ′ \left(t\right) .$

Optionally, **Φ**₁₃ and **Φ**₂₃ may be determined according to the following derivation process: $\begin{matrix}{\dot{Φ}}_{23} \left(t, {t}_{0}\right) = {F}_{: , 2} \left(t, {t}_{0}\right) {Φ}_{3 , :} \left(t, {t}_{0}\right) = \left[-U\left(t\right) -2\left[\hat{ω} \times {I}_{1}^{t}\right] -C\left(\hat{q} {I}_{2}^{t} {I}_{1}^{t}\right)\left[\hat{a} \times {I}_{1}^{t}\right] -K\left(t\right) {0}_{3} {I}_{3} -C\left(\hat{q} {I}_{2}^{t} {I}_{1}^{t}\right)\right] \left[\begin{matrix}{Φ}_{13} \\ {Φ}_{23} \\ {Φ}_{33} \\ {0}_{3} \\ {0}_{3} \\ {0}_{3} \\ {0}_{3}\end{matrix}\right] \\ = - U \left(t\right) - 2 \left[\hat{ω} \times {I}_{1}^{t}\right] {Φ}_{23} \left(t, {t}_{0}\right) - C \left(\hat{q} {I}_{2}^{t} {I}_{1}^{t}\right) \left[\hat{a} \times {I}_{2}^{t}\right] {Φ}_{33} \left(t, {t}_{0}\right)\end{matrix}$ ${\dot{Φ}}_{13} \left(t, {t}_{0}\right) = {F}_{: , 1} \left(t, {t}_{0}\right) {Φ}_{3 , :} \left(t, {t}_{0}\right) = {Φ}_{23} \left(t, {t}_{0}\right)$ ${{Φ}^{¨}}_{13} \left(t, {t}_{0}\right) + U \left(t\right) {Φ}_{13} \left(t, {t}_{0}\right) + 2 \left[\hat{ω} \times {I}_{1}^{t}\right] {\dot{Φ}}_{13} \left(t, {t}_{0}\right) + C \left(\hat{q} {I}_{2}^{t} {I}_{1}^{t}\right) \left[\hat{a} \times {I}_{2}^{t}\right] C \left(\hat{q} {I}_{2}^{{t}_{0}} {I}_{2}^{t}\right) = {0}_{3}$ ${Φ}_{13} \left({t}_{0}, {t}_{0}\right) = {0}_{3}$ ${Φ}_{23} \left({t}_{0}, {t}_{0}\right) = {0}_{3}$ ${Φ}_{13} \left(t, {t}_{0}\right) = - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτds$ $\begin{matrix}{Φ}_{23} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτds \\ - C ′ \left(t\right) {\int }_{{t}_{0}}^{t} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτ .\end{matrix}$

Optionally, **Φ**₁₄ and **Φ**₂₄ may be determined according to the following derivation process: $\begin{matrix}{\dot{Φ}}_{24} \left(t, {t}_{0}\right) = {F}_{2 , :} \left(t, {t}_{0}\right) {Φ}_{: , 4} \left(t, {t}_{0}\right) = \left[-U\left(t\right) -2\left[\hat{ω} \times {I}_{1}^{t}\right] -C\left(\hat{q} {I}_{2}^{t} {I}_{1}^{t}\right)\left[\hat{a} \times {I}_{1}^{t}\right] -K\left(t\right) {0}_{3} {I}_{3} -C\left(\hat{q} {I}_{2}^{t} {I}_{1}^{t}\right)\right] \left[\begin{matrix}{Φ}_{14} \\ {Φ}_{24} \\ {Φ}_{34} \\ {I}_{3} \\ {0}_{3} \\ {0}_{3} \\ {0}_{3}\end{matrix}\right] \\ = - U \left(t\right) {Φ}_{14} \left(t, {t}_{0}\right) - 2 \left[\hat{ω} \times {I}_{1}^{t}\right] {Φ}_{24} \left(t, {t}_{0}\right) - C \left(\hat{q} {I}_{2}^{t} {I}_{1}^{t}\right) {Φ}_{34} \left(t, {t}_{0}\right) - K \left(t\right)\end{matrix}$ ${\dot{Φ}}_{14} \left(t, {t}_{0}\right) = {F}_{1 , :} \left(t, {t}_{0}\right) {Φ}_{: , 4} \left(t, {t}_{0}\right) = {Φ}_{24} \left(t, {t}_{0}\right)$ ${{Φ}^{¨}}_{14} \left(t, {t}_{0}\right) + U \left(t\right) {Φ}_{14} \left(t, {t}_{0}\right) + 2 \left[\hat{ω} \times {I}_{1}^{t}\right] {\dot{Φ}}_{14} \left(t, {t}_{0}\right) + C \left(\hat{q} {I}_{2}^{t} {I}_{1}^{t}\right) \left[\hat{a} \times {I}_{2}^{t}\right] C " \left(t\right) {\int }_{{t}_{0}}^{t} C \left(\hat{q} {I}_{2}^{s} {I}_{2}^{{t}_{0}}\right) ds + K \left(t\right) = {0}_{3}$ ${Φ}_{14} \left({t}_{0}, {t}_{0}\right) = {0}_{3}$ ${Φ}_{24} \left({t}_{0}, {t}_{0}\right) = {0}_{3}$ $\begin{matrix}{Φ}_{14} \left(t, {t}_{0}\right) = - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[\left(C\left(\hat{q} {I}_{2}^{τ} {I}_{1}^{τ}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτds \\ - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) K \left(τ\right) dτds\end{matrix}$ $\begin{matrix}{Φ}_{24} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[\left(C\left(\hat{q} {I}_{2}^{τ} {I}_{1}^{τ}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτds \\ + \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) K \left(τ\right) dτds \\ - C ′ \left(t\right) {\int }_{{t}_{0}}^{t} C \left(\hat{q} {I}_{1}^{τ} {I}_{1}^{{t}_{0}}\right) \left[\left(C\left(\hat{q} {I}_{1}^{τ} {I}_{1}^{{t}_{τ}}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτ - C ′ \left(t\right) {\int }_{{t}_{0}}^{t} C \left(\hat{q} {I}_{1}^{τ} {I}_{1}^{{t}_{0}}\right) K \left(τ\right) dτ .\end{matrix}$

Optionally, **Φ**₁₅ and **Φ**₂₅ may be determined according to the following derivation process: $\begin{matrix}{\dot{Φ}}_{25} \left(t, {t}_{0}\right) = {F}_{2 , :} \left(t, {t}_{0}\right) {Φ}_{: , 5} \left(t, {t}_{0}\right) = \left[-U\left(t\right) -2\left[\hat{ω} \times {I}_{1}^{t}\right] -C\left(\hat{q} {I}_{2}^{t} {I}_{1}^{t}\right)\left[\hat{a} \times {I}_{1}^{t}\right] -K\left(t\right) {0}_{3} {I}_{3} -C\left(\hat{q} {I}_{2}^{t} {I}_{1}^{t}\right)\right] \left[\begin{matrix}{Φ}_{15} \\ {Φ}_{25} \\ {Φ}_{35} \\ {0}_{3} \\ {I}_{3} \\ {0}_{3} \\ {0}_{3}\end{matrix}\right] \\ = - U \left(t\right) {Φ}_{15} \left(t, {t}_{0}\right) - 2 \left[\hat{ω} \times {I}_{1}^{t}\right] {Φ}_{25} \left(t, {t}_{0}\right) - C \left(\hat{q} {I}_{2}^{t} {I}_{1}^{t}\right) \left[\hat{a} \times {I}_{2}^{t}\right] {Φ}_{35} \left(t, {t}_{0}\right)\end{matrix}$ ${\dot{Φ}}_{15} \left(t, {t}_{0}\right) = {F}_{1 , :} \left(t, {t}_{0}\right) {Φ}_{: , 5} \left(t, {t}_{0}\right) = {Φ}_{25} \left(t, {t}_{0}\right)$ ${{Φ}^{¨}}_{15} \left(t, {t}_{0}\right) + U \left(t\right) {Φ}_{15} \left(t, {t}_{0}\right) + 2 \left[\hat{ω} \times {I}_{1}^{t}\right] {\dot{Φ}}_{15} \left(t, {t}_{0}\right) - C \left(\hat{q} {I}_{2}^{t} {I}_{1}^{t}\right) \left[\hat{a} \times {I}_{2}^{t}\right] C " \left(t\right) {\int }_{{t}_{0}}^{t} C \left(\hat{q} {I}_{2}^{s} {I}_{2}^{{t}_{0}}\right) ds = {0}_{3}$ ${Φ}_{15} \left({t}_{0}, {t}_{0}\right) = {0}_{3}$ ${Φ}_{25} \left({t}_{0}, {t}_{0}\right) = {0}_{3}$ ${Φ}_{15} \left(t, {t}_{0}\right) = C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{μ} {I}_{1}^{τ}\right) dμdτds$ $\begin{matrix}{Φ}_{25} \left(t, {t}_{0}\right) = - \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{τ} {I}_{1}^{τ}\right) dμdτds \\ + C ′ \left(t\right) {\int }_{{t}_{0}}^{t} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{μ} {I}_{1}^{τ}\right) dμdτ .\end{matrix}$

Optionally, **Φ**₁₆ and **Φ**₂₆ may be determined according to the following derivation process: $\begin{matrix}{\dot{Φ}}_{26} \left(t, {t}_{0}\right) = {F}_{2 , :} \left(t, {t}_{0}\right) {Φ}_{: , 6} \left(t, {t}_{0}\right) = \left[-U\left(t\right) -2\left[\hat{ω} \times {I}_{1}^{t}\right] -C\left(\hat{q} {I}_{2}^{t} {I}_{1}^{t}\right)\left[\hat{a} \times {I}_{1}^{t}\right] -K\left(t\right) {0}_{3} {I}_{3} -C\left(\hat{q} {I}_{2}^{t} {I}_{1}^{t}\right)\right] \left[\begin{matrix}{Φ}_{16} \\ {Φ}_{26} \\ {0}_{3} \\ {0}_{3} \\ {0}_{3} \\ {I}_{3} \\ {0}_{3}\end{matrix}\right] \\ = - U \left(t\right) {Φ}_{16} \left(t, {t}_{0}\right) - 2 \left[\hat{ω} \times {I}_{1}^{t}\right] {Φ}_{26} \left(t, {t}_{0}\right) + {I}_{3}\end{matrix}$ ${\dot{Φ}}_{16} \left(t, {t}_{0}\right) = {F}_{1 , :} \left(t, {t}_{0}\right) {Φ}_{: , 6} \left(t, {t}_{0}\right) = {Φ}_{26} \left(t, {t}_{0}\right)$ ${{Φ}^{¨}}_{16} \left(t, {t}_{0}\right) + U \left(t\right) {Φ}_{16} \left(t, {t}_{0}\right) + 2 \left[\hat{ω} \times {I}_{1}^{t}\right] {\dot{Φ}}_{16} \left(t, {t}_{0}\right) - {I}_{3} = {0}_{3}$ ${Φ}_{16} \left({t}_{0}, {t}_{0}\right) = {0}_{3}$ ${Φ}_{26} \left({t}_{0}, {t}_{0}\right) = {0}_{3}$ ${Φ}_{16} \left(t, {t}_{0}\right) = C ′ \left(t\right) {\int }_{{t}_{0}}^{t} {\int }_{{t}_{0}}^{s} C \left(\hat{q} {I}_{1}^{τ} {I}_{1}^{{t}_{0}}\right) dτ ds$ ${Φ}_{26} \left(t, {t}_{0}\right) = - \left[\hat{ω} \times {I}_{1}^{t}\right] C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτds + C ′ \left(t\right) {\int }_{{t}_{0}}^{t} C \left(\hat{q} {I}_{1}^{τ} {I}_{1}^{{t}_{0}}\right) dτ .$

Optionally, **Φ**₁₇ and **Φ**₂₇ may be determined according to the following derivation process: $\begin{matrix}{\dot{Φ}}_{27} \left(t, {t}_{0}\right) = {F}_{2 , :} {Φ}_{: , 7} = \left[-U\left(t\right) -2\left[\hat{ω} \times {I}_{1}^{t}\right] -C\left(\hat{q} {I}_{1}^{t} {I}_{1}^{t}\right)\left[\hat{a} \times {I}_{2}^{t}\right] -K\left(t\right) {0}_{3} {I}_{3} -C\left(\hat{q} {I}_{2}^{t} {I}_{1}^{t}\right)\right] \left[\begin{matrix}{Φ}_{17} \\ {Φ}_{27} \\ {0}_{3} \\ {0}_{3} \\ {0}_{3} \\ {0}_{3} \\ {I}_{3}\end{matrix}\right] \\ = - U \left(t, {t}_{0}\right) {Φ}_{17} - 2 \left[\hat{ω} \times {I}_{1}^{t}\right] {Φ}_{27} - C \left(\hat{q} {I}_{2}^{t} {I}_{1}^{t}\right)\end{matrix}$ ${\dot{Φ}}_{17} \left(t, {t}_{0}\right) = {F}_{1 , :} {Φ}_{: , 7} = {Φ}_{27} \left(t, {t}_{0}\right)$ ${{Φ}^{¨}}_{17} \left(t, {t}_{0}\right) + U \left(t\right) {Φ}_{17} \left(t, {t}_{0}\right) + 2 \left[\hat{ω} \times {I}_{1}^{t}\right] {\dot{Φ}}_{17} \left(t, {t}_{0}\right) + C \left(\hat{q} {I}_{2}^{t} {I}_{1}^{t}\right) = {0}_{3}$ ${Φ}_{17} \left({t}_{0}, {t}_{0}\right) = {0}_{3}$ ${Φ}_{27} \left({t}_{0}, {t}_{0}\right) = {0}_{3}$ ${Φ}_{17} \left(t, {t}_{0}\right) = - C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτ ds$ ${Φ}_{27} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτds - C ′ \left(t\right) {\int }_{{t}_{0}}^{t} C \left(\hat{q} {I}_{2}^{τ} {I}_{1}^{{t}_{0}}\right) dτ .$

At this point, based on the relationship that needs to be satisfied between F and **Φ**(*t*,*t*₀), the analytical solution of each parameter in the discrete-time error-state transition matrix is obtained through rigorous mathematical derivation. Thus, the first-type analytical solution can be obtained. Using the first-type analytical solution to determine the discrete-time error-state transition matrix is beneficial to ensuring the reliability of the determined discrete-time error-state transition matrix.

It should be noted that the specific expression of F introduced above is merely one possible form, and those skilled in the art may also use other expressions according to actual conditions. If other expressions are used, based on the relationship that needs to be satisfied between F and **Φ**(*t*,*t*₀), a corresponding analytical solution may also be obtained through rigorous mathematical derivation.

As shown in Fig. 10, a schematic flowchart of a method for determining an estimated state vector according to some exemplary embodiments of the present disclosure is provided. The method shown in Fig. 10 may include steps 1010 and 1020. Optionally, the combination of steps 1010 and 1020 may be used as an optional implementation of step 230 of the present disclosure.
step 1010: obtaining a second-type analytical solution determined based on the state estimation equation and a preset method, wherein the preset method includes at least one of a Runge-Kutta method and a numerical approximation method, and the second-type analytical solution refers to an analytical solution of parameters in the estimated state vector.

Step 1020: determining the estimated state vector based on the state vector, the first data, the second data and the second-type analytical solution.

It should be noted that the equations included in the state estimation equation are introduced above. These equations involve various operational logic, and there are coupling relationships between many parameters involved in these equations. Integration results of some parameters in the state estimation equation may be very complex, making it difficult to derive an analytical solution of the parameters in the estimated state vector from the state estimation equation.

In view of this, in some optional implementations of the present disclosure, before the method shown in Fig. 10 is executed, on the basis of the state estimation equation, at least one of a Runge-Kutta method and a numerical approximation method may be introduced for simplification, so as to obtain the second-type analytical solution. For the specific usage of the Runge-Kutta method and the numerical approximation method, reference may be made to the relevant introduction in the embodiments illustrated in Fig. 6, and this will not be described here. Subsequently, the second-type analytical solution may be stored in a preset third storage area.

In step 1010, the second-type analytical solution may be obtained from the third storage area. In step 1020, by simply substituting all of the state vector, the first data and the second data into the second-type analytical solution for calculation, the corresponding estimated state vector can be obtained efficiently and reliably.

Using the embodiments illustrated in Fig. 10, by introducing at least one of the Runge-Kutta method and the numerical approximation method, the second-type analytical solution can be successfully obtained. Since a lever-arm-related constraint is introduced into the state estimation equation, the second-type analytical solution obtained based on the state estimation equation can also reflect the lever-arm-related constraint. Therefore, using the second-type analytical solution to determine the estimated state vector is beneficial to eliminating the lever arm error, thereby improving the accuracy of state estimation, thus improving the accuracy of relative positioning between the second device and the first device.

In some optional implementations of the present disclosure, the state vector, the first data and the second data may be obtained, and the estimated state vector may be determined based on the state vector, the first data, the second data and the state estimation equation that meets the predetermined lever-arm constraint condition. In this way, by introducing the lever-arm related constraint into the state estimation equation, the reliability of the estimated state vector can be ensured.

After the estimated state vector is determined, in an example where the estimated state vector is used as a prior state vector, the prior state vector may be corrected to obtain a corrected state vector. In a correction stage, the discrete-time error-state transition matrix may be determined based on the first-type analytical solution, and the discrete-time error-state transition matrix may be used. In this way, the reliability of the discrete-time error-state transition matrix can be ensured, thereby helping to ensure the reliability of the corrected state vector. The corrected relative position and corrected relative attitude in the corrected state vector may be used as a relative positioning result between the second device and the first device. Therefore, using the embodiments of the present disclosure is beneficial to improving the accuracy of relative positioning between the second device and the first device.

Any method for state estimation according to embodiments of the present disclosure may be executed by any suitable device having data processing capabilities, including but not limited to a terminal device and a server, etc. Alternatively, any method for state estimation according to embodiments of the present disclosure may be executed by a processor. For example, the processor executes any method for state estimation mentioned in embodiments of the present disclosure, by calling corresponding instructions stored in a memory. This will not be described here.

### Exemplary apparatus

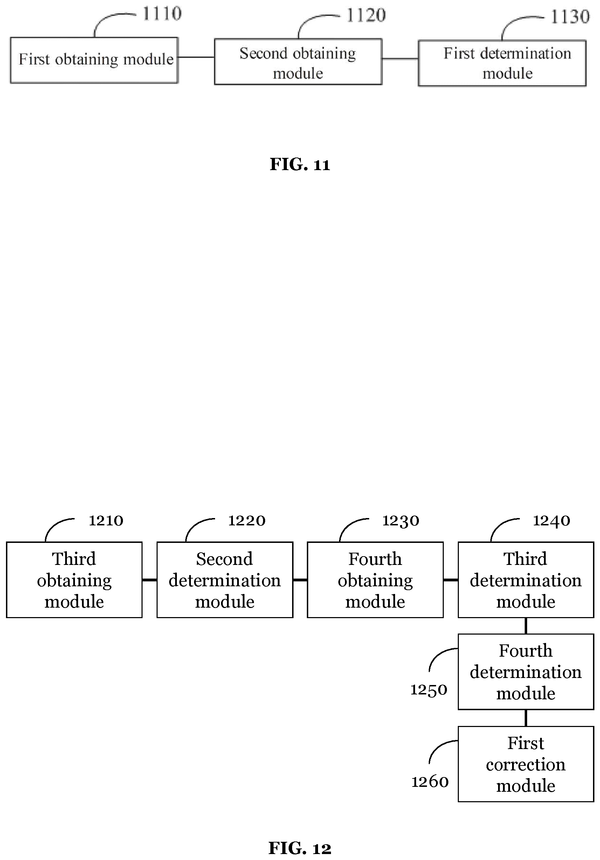

As shown in Fig. 11, a schematic structural diagram of an apparatus for state estimation according to some exemplary embodiments of the present disclosure is provided. The apparatus shown in Fig. 11 may include: a first obtaining module 1110 configured to obtain a state vector, first data collected by a first inertial measurement unit provided on a first device, and second data collected by a second inertial measurement unit provided on a second device, wherein the state vector includes: a target parameter, a relative position and a relative attitude between the second device and the first device, an angular velocity bias and an acceleration bias of the first inertial measurement unit, and an angular velocity bias and an acceleration bias of the second inertial measurement unit; and the target parameter includes at least one of the following two: a relative velocity between the second device and the first device, and a projection result obtained by projecting the relative velocity between the second device and the first device in an inertial coordinate system to a reference coordinate system, wherein the reference coordinate system is a coordinate system corresponding to one of the first inertial measurement unit and the second inertial measurement unit; a second obtaining module 1120 configured to obtain a state estimation equation that meets a predetermined lever-arm constraint condition, wherein the predetermined lever-arm constraint condition is defined by at least one of a first equation and a second equation, the first equation defining the relative velocity between the second device and the first device, and the second equation defining the relative position between the second device and the first device; and a first determination module 1130 configured to determine an estimated state vector based on the state vector, the first data, the second data and the state estimation equation.

In some optional implementations of the present disclosure, as shown in Fig. 12, the apparatus according to the embodiments of the present disclosure may further include: a third obtaining module 1210 configured to obtain a state covariance matrix of an error state vector corresponding to the state vector, a first-type analytical solution determined based on preset definition information, and observation data obtained by observing the first device and the second device through a target sensor, wherein the preset definition information refers to definition information of parameters in a discrete-time error-state transition matrix; the first-type analytical solution refers to an analytical solution of the parameters in the discrete-time error-state transition matrix; and the target sensor is of a different type from the inertial measurement units; a second determination module 1220 configured to determine the discrete-time error-state transition matrix based on the state vector, a prior state vector, the first data, the second data and the first-type analytical solution; a fourth obtaining module 1230 configured to obtain a noise Jacobian matrix and a continuous-time noise covariance matrix; a third determination module 1240 configured to determine a discrete-time noise covariance matrix based on the discrete-time error-state transition matrix, the noise Jacobian matrix and the continuous-time noise covariance matrix; a fourth determination module 1250 configured to determine a prior-state covariance matrix based on the discrete-time error-state transition matrix, the discrete-time noise covariance matrix and the state covariance matrix; and a first correction module 1260 configured to correct the prior state vector based on the prior-state covariance matrix and the observation data.

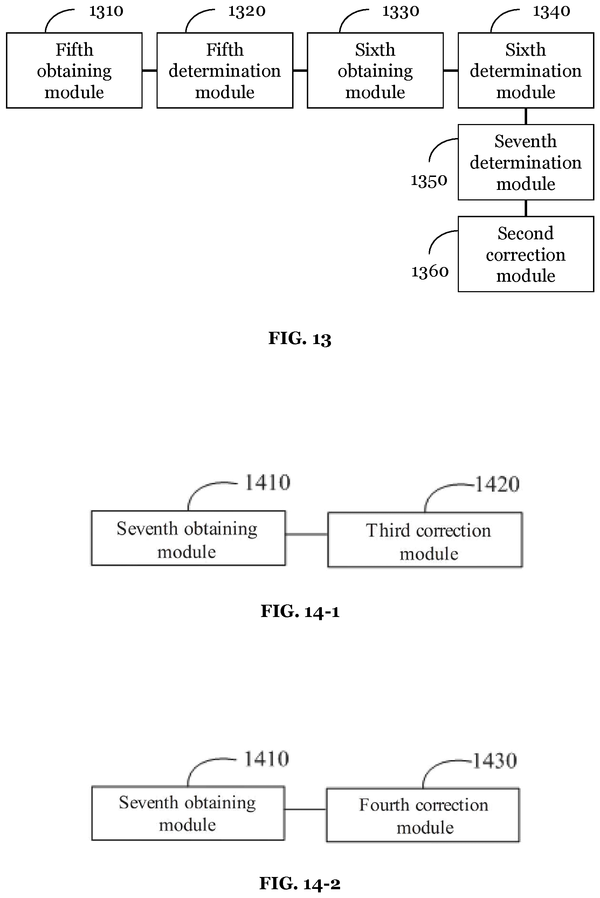

In some optional implementations of the present disclosure, as shown in Fig. 13, the apparatus according to the embodiments of the present disclosure may further include: a fifth obtaining module 1310 configured to obtain a first-type analytical solution determined based on preset definition information, and observation data obtained by observing the first device and the second device through a target sensor, wherein the preset definition information refers to definition information of parameters in a discrete-time error-state transition matrix; the first-type analytical solution refers to an analytical solution of the parameters in the discrete-time error-state transition matrix; and the target sensor is of a different type from the inertial measurement units; a fifth determination module 1320 configured to determine the discrete-time error-state transition matrix based on the state vector, a prior state vector, the first data, the second data and the first-type analytical solution; a sixth obtaining module 1330 configured to obtain a noise Jacobian matrix and a continuous-time noise covariance matrix; a sixth determination module 1340 configured to determine a discrete-time noise covariance matrix based on the discrete-time error-state transition matrix, the noise Jacobian matrix and the continuous-time noise covariance matrix; a seventh determination module 1350 configured to determine a target Jacobian matrix for the observation data, the first data and the second data with respect to an error state vector corresponding to the state vector; and a second correction module 1360 configured to correct the prior state vector based on the discrete-time noise covariance matrix, the target Jacobian matrix, the observation data, the first data and the second data.

In some optional implementations of the present disclosure, as shown in Figs. 14-1 and 14-2, the apparatus according to the embodiments of the present disclosure may further include: a seventh obtaining module 1410 configured to obtain a first-type analytical solution determined based on preset definition information, wherein the preset definition information refers to definition information of parameters in a discrete-time error-state transition matrix, and the first-type analytical solution refers to an analytical solution of the parameters in the discrete-time error-state transition matrix. The apparatus according to the embodiments of the present disclosure can satisfy one of the following: using the estimated state vector as a prior state vector, as shown in Fig. 14-1, the apparatus further includes: a third correction module 1420 configured to correct the prior state vector based on the state vector, the prior state vector, the first data, the second data and the first-type analytical solution; and as shown in Fig. 14-2, the apparatus may further include: a fourth correction module 1430 configured to obtain a prior state vector, and correct the prior state vector based on the prior state vector, the estimated state vector, the first data, the second data and the first-type analytical solution, wherein at least part of the estimated state vector is used as observation data.

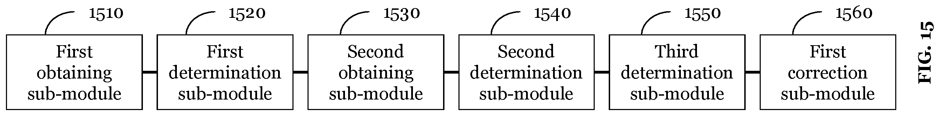

In some optional implementations of the present disclosure, as shown in Fig. 15, the third correction module 1420 includes:
a first obtaining sub-module 1510 configured to obtain observation data, and a state covariance matrix of an error state vector corresponding to the state vector;
a first determination sub-module 1520 configured to determine the discrete-time error-state transition matrix based on the state vector, the prior state vector, the first data, the second data and the first-type analytical solution;
a second obtaining sub-module 1530 configured to obtain a noise Jacobian matrix and a continuous-time noise covariance matrix;
a second determination sub-module 1540 configured to determine a discrete-time noise covariance matrix based on the discrete-time error-state transition matrix, the noise Jacobian matrix and the continuous-time noise covariance matrix;
a third determination sub-module 1550 configured to determine a prior-state covariance matrix based on the discrete-time error-state transition matrix, the discrete-time noise covariance matrix and the state covariance matrix; and
a first correction sub-module 1560 configured to correct the prior state vector based on the prior-state covariance matrix and the observation data.

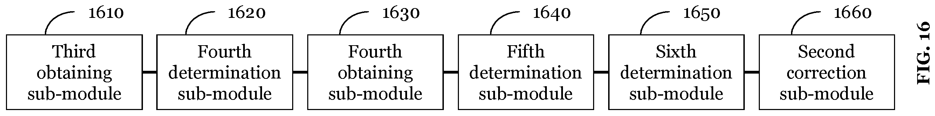

In some optional implementations of the present disclosure, as shown in Fig. 16, the third correction module 1420 includes:
a third obtaining sub-module 1610 configured to obtain observation data;
a fourth determination sub-module 1620 configured to determine the discrete-time error-state transition matrix based on the state vector, the prior state vector, the first data, the second data and the first-type analytical solution;
a fourth obtaining sub-module 1630 configured to obtain a noise Jacobian matrix and a continuous-time noise covariance matrix;
a fifth determination sub-module 1640 configured to determine a discrete-time noise covariance matrix based on the discrete-time error-state transition matrix, the noise Jacobian matrix and the continuous-time noise covariance matrix;
a sixth determination sub-module 1650 configured to determine a target Jacobian matrix for the observation data, the first data and the second data with respect to an error state vector corresponding to the state vector; and
a second correction sub-module 1660 configured to correct the prior state vector based on the discrete-time noise covariance matrix, the target Jacobian matrix, the observation data, the first data and the second data.

In some optional implementations of the present disclosure, a parameter located in the i-th row and the j-th column in the discrete-time error-state transition matrix is denoted as **Φ***ᵢⱼ*(*t,t*₀), and the first-type analytical solution includes at least one of the following: ${Φ}_{33} \left(t, {t}_{0}\right) = C \left(\hat{q} {I}_{2}^{{t}_{0}} {I}_{2}^{t}\right)$ ${Φ}_{34} \left(t, {t}_{0}\right) = C " \left(t\right) {\int }_{{t}_{0}}^{t} C \left(\hat{q} {I}_{2}^{s} {I}_{2}^{{t}_{0}}\right) ds$ ${Φ}_{35} \left(t, {t}_{0}\right) = - C " \left(t\right) {\int }_{{t}_{0}}^{t} C \left(\hat{q} {I}_{2}^{s} {I}_{2}^{{t}_{0}}\right) ds$ ${Φ}_{11} \left(t, {t}_{0}\right) = C ′ \left(t\right) \left(I+\left[\hat{ω} \times {I}_{1}^{{t}_{0}}\right]\left(t-{t}_{0}\right)\right)$ ${Φ}_{21} \left(t, {t}_{0}\right) = - \left[\hat{ω} \times {I}_{1}^{t}\right] C ′ \left(t\right) \left(I+\left[\hat{ω} \times {I}_{1}^{{t}_{0}}\right]\left(t-{t}_{0}\right)\right) + C ′ \left(t\right) \left[\hat{ω} \times {I}_{1}^{{t}_{0}}\right]$ ${Φ}_{12} \left(t, {t}_{0}\right) = C ′ \left(t\right) \left(t-{t}_{0}\right)$ ${Φ}_{22} \left(t, {t}_{0}\right) = - \left[\hat{ω} \times {I}_{1}^{t}\right] C ′ \left(t\right) \left(t-{t}_{0}\right) + C ′ \left(t\right)$ ${Φ}_{13} \left(t, {t}_{0}\right) = - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτds$ $\begin{matrix}{Φ}_{23} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτds \\ - C ′ \left(t\right) {\int }_{{t}_{0}}^{t} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτ\end{matrix}$ $\begin{matrix}{Φ}_{14} \left(t, {t}_{0}\right) = - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[\left(C\left(\hat{q} {I}_{2}^{τ} {I}_{1}^{τ}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτds \\ - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) K \left(τ\right) dτds\end{matrix}$ $\begin{matrix}{Φ}_{24} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[\left(C\left(\hat{q} {I}_{2}^{τ} {I}_{1}^{τ}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτds \\ + \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) K \left(τ\right) dτds \\ - C ′ \left(t\right) {\int }_{{t}_{0}}^{t} C \left(\hat{q} {I}_{1}^{τ} {I}_{1}^{{t}_{0}}\right) \left[\left(C\left(\hat{q} {I}_{1}^{τ} {I}_{1}^{{t}_{0}}\right)\hat{a} {I}_{2}^{⊤}\right)\times \right] {\int }_{{t}_{0}}^{τ} C \left(\hat{q} {I}_{1}^{μ} {I}_{1}^{τ}\right) dμdτ - C ′ \left(t\right) {\int }_{{t}_{0}}^{t} C \left(\hat{q} {I}_{1}^{τ} {I}_{1}^{{t}_{0}}\right) K \left(τ\right) dτ\end{matrix}$ ${Φ}_{15} \left(t, {t}_{0}\right) = C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{μ} {I}_{1}^{τ}\right) dμdτds$ $\begin{matrix}{Φ}_{25} \left(t, {t}_{0}\right) = - \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{τ} {I}_{1}^{τ}\right) dμdτds \\ + C ′ \left(t\right) {\int }_{{t}_{0}}^{t} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{μ} {I}_{1}^{τ}\right) dμdτ\end{matrix}$ ${Φ}_{16} \left(t, {t}_{0}\right) = C ′ \left(t\right) {\int }_{{t}_{0}}^{t} {\int }_{{t}_{0}}^{s} C \left(\hat{q} {I}_{1}^{τ} {I}_{1}^{{t}_{0}}\right) dτ ds$ ${Φ}_{26} \left(t, {t}_{0}\right) = - \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) dτds + C ′ \left(t\right) {\int }_{{t}_{0}}^{t} C \left(\hat{q} {I}_{1}^{τ} {I}_{1}^{{t}_{0}}\right) dτ$ ${Φ}_{17} \left(t, {t}_{0}\right) = - C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτds$ ${Φ}_{27} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτds - C ′ \left(t\right) {\int }_{{t}_{0}}^{t} C \left(\hat{q} {I}_{2}^{τ} {I}_{1}^{{t}_{0}}\right) dτ ;$ ${if i = 3 , and j = 1 , 2 , 6 or 7 , then Φ}_{3 j} \left(t, {t}_{0}\right) = {0}_{3} ;$ $if i > 3 , and i \neq j , then {Φ}_{ij} \left(t ,{t}_{0}\right) = {I}_{3} ;$ and $if i > 3 , and i \neq j , then {Φ}_{ij} \left(t ,{t}_{0}\right) = {0}_{3} ,$ wherein $C " \left(t\right) = C \left(\hat{q} {I}_{2}^{{t}_{0}} {I}_{2}^{t}\right) , C ′ \left(t\right) = C \left(\hat{q} {I}_{1}^{{t}_{0}} {I}_{1}^{t}\right)$, and $K ≜ \left[\hat{ω} \times {I}_{1}\right] \left[\hat{p} {I}_{2 \times } {I}_{1}\right] + \left[{\left(\hat{ω} {I}_{1}{\times }^{{I}_{1}}{\hat{p}}_{{I}_{2}}+{2}^{{I}_{1}}{\hat{v}}_{{I}_{2}}\right)}_{\times }\right]$.

In some optional implementations of the present disclosure, the discrete-time noise covariance matrix is denoted as **Q**_{*k,k*-1}, and the discrete-time noise covariance matrix is calculated by the following equation: ${Q}_{k , k - 1} = {\int }_{{t}_{k - 1}}^{{t}_{k}} Φ \left(τ\right) G \left(τ\right) {Q}_{c} {G}^{T} \left(τ\right) {Φ}^{T} \left(τ\right) dτ$ where **Φ**(*τ*) represents a discrete-time error-state transition matrix between time *τ* and time k-1, **G**(*τ*) represents a noise Jacobian matrix between time *τ* and time k-1, and **Q***_{c}* represents a continuous-time noise covariance matrix.

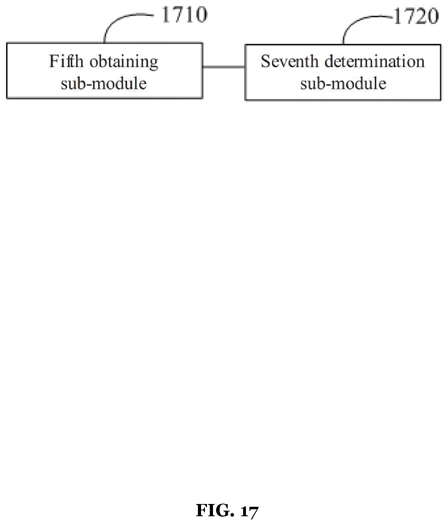

In some optional implementations of the present disclosure, as shown in Fig. 17, any one of the second determination module 1220, the fifth determination module 1320, the first determination sub-module 1520 and the fourth determination sub-module 1620 may include: a fifth obtaining sub-module 1710 configured to obtain a processing result obtained by processing the first-type analytical solution according to a preset method, wherein the preset method includes at least one of a Runge-Kutta method and a numerical approximation method; and a seventh determination sub-module 1720 configured to determine the discrete-time error-state transition matrix based on the state vector, the prior state vector, the first data, the second data and the processing result.

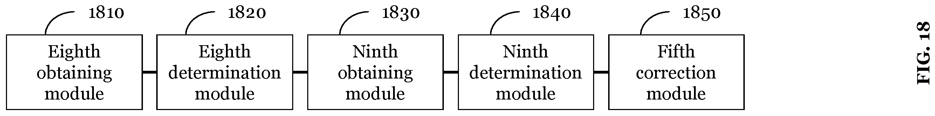

In some optional implementations of the present disclosure, as shown in Fig. 18, the apparatus according to the embodiments of the present disclosure further includes: an eighth obtaining module 1810 configured to obtain a continuous-time error-state transition matrix and observation data; an eighth determination module 1820 configured to determine a discrete-time error-state transition matrix based on the continuous-time error-state transition matrix; a ninth obtaining module 1830 configured to obtain a noise Jacobian matrix and a continuous-time noise covariance matrix; a ninth determination module 1840 configured to determine a discrete-time noise covariance matrix based on the discrete-time error-state transition matrix, the noise Jacobian matrix and the continuous-time noise covariance matrix; and a fifth correction module 1850 configured to correct the estimated state vector based on the discrete-time noise covariance matrix and the observation data, wherein the continuous-time error-state transition matrix is denoted as F, and the continuous-time error-state transition matrix is calculated by the following equation: $F = \left[\begin{matrix}{0}_{3} & {I}_{3} & {0}_{3} & {0}_{3} & {0}_{3} & {0}_{3} & {0}_{3} \\ - U & - 2 \left[{\hat{ω}}_{1 \times }\right] & - \hat{C} \left[{\hat{a}}_{2 \times }\right] & - K & {0}_{3} & {I}_{3} & - \hat{C} \\ {0}_{3} & {0}_{3} & - \left[{\hat{ω}}_{2 \times }\right] & {\hat{C}}^{T} & - {I}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3}\end{matrix}\right]$ $U ≜ {\left[\hat{ω} \times {I}_{1}\right]}^{2} + \left[\dot{\hat{ω}} \times {I}_{1}\right]$ $\hat{C} ≜ C \left(\hat{q} {I}_{2} {I}_{1}\right)$ $K ≜ \left[\hat{ω} \times {I}_{1}\right] \left[\hat{p} {I}_{2 \times } {I}_{1}\right] + \left[{\left(\hat{ω} {I}_{1}{\times }^{{I}_{1}}{\hat{p}}_{{I}_{2}}+{2}^{{I}_{1}}{\hat{v}}_{{I}_{2}}\right)}_{\times }\right] .$

In some optional implementations of the present disclosure, the observation data includes at least one of the following: a preset observed relative position between the second device and the first device; data obtained by observing the first device and the second device through a target sensor, the target sensor being of a different type from the inertial measurement units; and the first data collected by the first inertial measurement unit and the second data collected by the second inertial measurement unit.

In some optional implementations of the present disclosure, the first equation defines a relationship between a result of differentiating the relative velocity between the first device and the second device, and a target difference, wherein the target difference refers to a difference obtained by subtracting a Coriolis acceleration and a convected acceleration from a reference relative acceleration, wherein the reference relative acceleration is associated with the relative attitude between the first device and the second device, a first corrected acceleration, and a second corrected acceleration; the first corrected acceleration is a difference between an acceleration measured by the first inertial measurement unit and the acceleration bias of the first inertial measurement unit; the second corrected acceleration is a difference between an acceleration measured by the second inertial measurement unit and the acceleration bias of the second inertial measurement unit; the Coriolis acceleration is associated with a corrected angular velocity and the relative velocity between the first device and the second device; the corrected angular velocity is a difference between an angular velocity measured by an inertial measurement unit corresponding to the reference coordinate system and the angular velocity bias of the inertial measurement unit; and the convected acceleration is associated with the corrected angular velocity, the relative position between the first device and the second device, and a result of differentiating the corrected angular velocity.

In some optional implementations of the present disclosure, the inertial measurement unit corresponding to the reference coordinate system is the first inertial measurement unit, and the first equation includes: $\begin{matrix}\dot{\hat{v}} {I}_{2} {I}_{1} \left(t\right) = C \left(\hat{q} {I}_{2} {I}_{1}\left(t\right)\right) \hat{a} {I}_{2} \left(t\right) - \hat{a} {I}_{1} \left(t\right) \\ - 2 \hat{ω} {I}_{1} \left(t\right) \times \hat{v} {I}_{2} {I}_{1} \left(t\right) \\ - \hat{ω} {I}_{1} \left(t\right) \times \left(\hat{ω} {I}_{1}\left(t\right)\times \hat{p} {I}_{2} {I}_{1}\left(t\right)\right) - \dot{\hat{ω}} {I}_{1} \left(t\right) \times \hat{p} {I}_{2} {I}_{1} \left(t\right) .\end{matrix}$

In some optional implementations of the present disclosure, the inertial measurement unit corresponding to the reference coordinate system is the first inertial measurement unit, and the second equation includes: $\dot{\hat{p}} {I}_{2} {I}_{1} \left(t\right) {=}^{{I}_{1}} \hat{v} {′}_{{I}_{2}} \left(t\right) {-}^{{I}_{1}} \hat{ω} \left(t\right) {\times }^{{I}_{1}} {\hat{p}}_{{I}_{2}} \left(t\right)$ $\dot{v} {I}_{1} {′}_{{I}_{2}} \left(t\right) = C {\left(\hat{q} {I}_{2} {I}_{1}\left(t\right)\right)}^{{I}_{2}} â \left(t\right) {-}^{{I}_{1}} â \left(t\right) {-}^{{I}_{1}} \hat{ω} \left(t\right) {\times }^{{I}_{1}} \hat{v} {′}_{{I}_{2}} \left(t\right) .$

Herein $\hat{v} {I}_{2} ′ {I}_{1} \left(t\right)$ is the projection result obtained by projecting the relative velocity between the second device and the first device in the inertial coordinate system to the reference coordinate system.

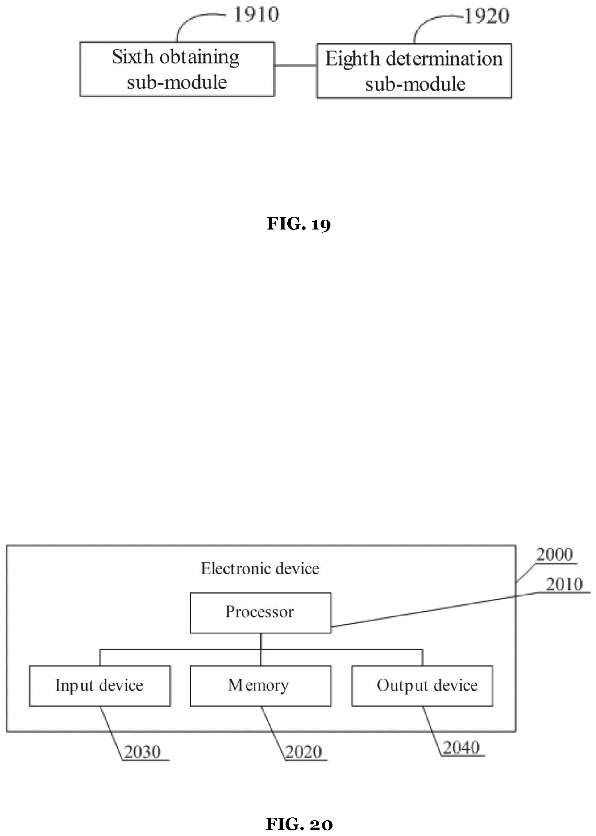

In some optional implementations of the present disclosure, as shown in Fig. 19, the first determination module 1130 includes: a sixth obtaining sub-module 1910 configured to obtain a second-type analytical solution determined based on the state estimation equation and a preset method, wherein the preset method includes at least one of a Runge-Kutta method and a numerical approximation method, and the second-type analytical solution refers to an analytical solution of parameters in the estimated state vector; and an eighth determination sub-module 1920 configured to determine the estimated state vector based on the state vector, the first data, the second data and the second-type analytical solution.

In the apparatus of the present disclosure, various optional embodiments, optional implementation manners, and optional examples disclosed above can be flexibly selected and combined as needed, so as to achieve corresponding functions and effects, which will not be enumerated in the present disclosure.

### Exemplary electronic device

Fig. 20 illustrates a block diagram of an electronic device according to embodiments of the present disclosure. The electronic device 2000 includes one or more processors 2010 and a memory 2020.

The processor 2010 may be a central processing unit (CPU) or another form of processing unit having data processing capabilities and/or instruction execution capabilities, and may control other components in the electronic device 2000 to perform desired functions.

The memory 2020 may include one or more computer program products. The computer program products may include various forms of computer-readable storage media, such as a volatile memory and/or a non-volatile memory. The volatile memory may include, for example, a random access memory (RAM) and/or a cache memory (cache), etc. The non-volatile memory may include, for example, a read-only memory (ROM), a hard disk, a flash memory, etc. One or more computer program instructions may be stored on the computer-readable storage medium, and the processor 2010 may execute the one or more computer program instructions to implement the method of various embodiments of the present disclosure described above and/or other desired functions.

In an example, the electronic device 2000 may further include an input device 2030 and an output device 2040. These components are interconnected through a bus system and/or another form of connection mechanism. The input device 2030 may further include, for example, a keyboard, a mouse, and the like. The output device 2040 may output various information to the outside, and may include, for example, a display, a speaker, a printer, as well as a communication network and a remote output device connected thereto, etc.

Of course, for simplicity, only some of the components of the electronic device 2000 relevant to the present disclosure are shown in Fig. 20, while components such as buses, input/output interfaces, and the like are omitted. In addition, depending on a specific application, the electronic device 2000 may further include any other appropriate components.

### Exemplary computer program product and computer-readable storage medium

In addition to the method and device described above, embodiments of the present disclosure may also be a computer program product including computer program instructions. The instructions, when executed by a processor, cause the processor to execute the steps of the method according to various embodiments of the present disclosure as described in the above-described "exemplary method" section of this specification.

The computer program product may use any combination of one or more programming languages to write program code for performing operations of the embodiments of the present disclosure. The programming languages include an object-oriented programming language such as Java or C++, and also include a conventional procedural programming language, such as the "C" language or a similar programming language. The program code may be executed entirely on a user's computing device, partly on a user's device, as an independent software package, partly on a user's computing device and partly on a remote computing device, or entirely on a remote computing device or server.

In addition, embodiments of the present disclosure may also be a computer-readable storage medium having computer program instructions stored thereon. The instructions, when executed by a processor, cause the processor to execute the steps of the method according to various embodiments of the present disclosure as described in the above-described "exemplary method" section of this specification.

The computer-readable storage medium may be any combination of one or more readable media. The readable medium may be a readable signal medium or a readable storage medium. The readable storage medium may include, for example, but is not limited to, an electronic, magnetic, optical, electromagnetic, infrared, or semiconductor system, apparatus or device, or any combination thereof. More specific examples (a non-exhaustive list) of the readable storage medium include: an electrical connection with one or more conducting wires, a portable disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination thereof.

Basic principles of the present disclosure are described above in conjunction with specific embodiments. However, the advantages, strengths, effects, and the like mentioned in the present disclosure are merely examples and not limitations, and these advantages, strengths, effects, and the like should not be regarded as indispensable for the embodiments of the present disclosure. The specific details in the above disclosure are merely for the purpose of exemplification and ease of understanding, and are not limiting. The above details do not constrain the present disclosure to be necessarily implemented with the above specific details.

Those skilled in the art can make various changes and modifications to the present disclosure without departing from the spirit and scope of the present application. Therefore, if these modifications and variations of the present application fall within the scope of the claims of the present disclosure and their equivalent technologies, the present disclosure is also intended to cover these changes and modifications.

## Claims

1. A method for state estimation, comprising:
obtaining a state vector, first data collected by a first inertial measurement unit provided on a first device, and second data collected by a second inertial measurement unit provided on a second device, wherein the state vector comprises: a target parameter, a relative position and a relative attitude between the second device and the first device, an angular velocity bias and an acceleration bias of the first inertial measurement unit, and an angular velocity bias and an acceleration bias of the second inertial measurement unit; and the target parameter comprises at least one of the following two: a relative velocity between the second device and the first device, and a projection result obtained by projecting the relative velocity between the second device and the first device in an inertial coordinate system to a reference coordinate system, wherein the reference coordinate system is a coordinate system corresponding to one of the first inertial measurement unit and the second inertial measurement unit;
obtaining a state estimation equation that meets a predetermined lever-arm constraint condition, wherein the predetermined lever-arm constraint condition is defined by at least one of a first equation and a second equation, the first equation defining the relative velocity between the second device and the first device, and the second equation defining the relative position between the second device and the first device; and
determining an estimated state vector based on the state vector, the first data, the second data and the state estimation equation.

2. The method according to claim 1, wherein the method further comprises:
obtaining a first-type analytical solution determined based on preset definition information, wherein the preset definition information refers to definition information of parameters in a discrete-time error-state transition matrix, and the first-type analytical solution refers to an analytical solution of the parameters in the discrete-time error-state transition matrix; and
the method further comprises at least one of the following:
correcting a prior state vector based on the state vector, the prior state vector, the first data, the second data and the first-type analytical solution, wherein the estimated state vector is used as the prior state vector; and
obtaining a prior state vector, and
correcting the prior state vector based on the prior state vector, the estimated state vector, the first data, the second data and the first-type analytical solution, wherein at least part of the estimated state vector is used as observation data.

3. The method according to claim 2, wherein correcting a prior state vector based on the state vector, the prior state vector, the first data, the second data and the first-type analytical solution comprises:
obtaining observation data, and a state covariance matrix of an error state vector corresponding to the state vector;
determining the discrete-time error-state transition matrix based on the state vector, the prior state vector, the first data, the second data and the first-type analytical solution;
obtaining a noise Jacobian matrix and a continuous-time noise covariance matrix;
determining a discrete-time noise covariance matrix based on the discrete-time error-state transition matrix, the noise Jacobian matrix and the continuous-time noise covariance matrix;
determining a prior-state covariance matrix based on the discrete-time error-state transition matrix, the discrete-time noise covariance matrix and the state covariance matrix; and
correcting the prior state vector based on the prior-state covariance matrix and the observation data.

4. The method according to claim 2, wherein correcting a prior state vector based on the state vector, the prior state vector, the first data, the second data and the first-type analytical solution comprises:
obtaining observation data;
determining the discrete-time error-state transition matrix based on the state vector, the prior state vector, the first data, the second data and the first-type analytical solution;
obtaining a noise Jacobian matrix and a continuous-time noise covariance matrix;
determining a discrete-time noise covariance matrix based on the discrete-time error-state transition matrix, the noise Jacobian matrix and the continuous-time noise covariance matrix;
determining a target Jacobian matrix for the observation data, the first data and the second data with respect to an error state vector corresponding to the state vector; and
correcting the prior state vector based on the discrete-time noise covariance matrix, the target Jacobian matrix, the observation data, the first data and the second data.

5. The method according to any one of claims 2 to 4, wherein a parameter located in the i-th row and the j-th column in the discrete-time error-state transition matrix is denoted as **Φ***ᵢⱼ* (*t*, *t*₀), and the first-type analytical solution comprises at least one of the following: ${Φ}_{33} \left(t, {t}_{0}\right) = C \left(\hat{q} {I}_{2}^{{t}_{0}} {I}_{2}^{t}\right)$ ${Φ}_{34} \left(t, {t}_{0}\right) = C " \left(t\right) {\int }_{{t}_{0}}^{t} C \left(\hat{q} {I}_{2}^{s} {I}_{2}^{{t}_{0}}\right) ds$ ${Φ}_{35} \left(t, {t}_{0}\right) = - C " \left(t\right) {\int }_{{t}_{0}}^{t} C \left(\hat{q} {I}_{2}^{s} {I}_{2}^{{t}_{0}}\right) ds$ ${Φ}_{11} \left(t, {t}_{0}\right) = C ′ \left(t\right) \left(I+\left[\hat{ω} \times {I}_{1}^{{t}_{0}}\right]\left(t-{t}_{0}\right)\right)$ ${Φ}_{21} \left(t, {t}_{0}\right) = - \left[\hat{ω} \times {I}_{1}^{t}\right] C ′ \left(t\right) \left(I+\left[\hat{ω} \times {I}_{1}^{{t}_{0}}\right]\left(t-{t}_{0}\right)\right) + C ′ \left(t\right) \left[\hat{ω} \times {I}_{1}^{{t}_{0}}\right]$ ${Φ}_{12} \left(t, {t}_{0}\right) = C ′ \left(t\right) \left(t-{t}_{0}\right)$ ${Φ}_{22} \left(t, {t}_{0}\right) = - \left[\hat{ω} \times {I}_{1}^{t}\right] C ′ \left(t\right) \left(t-{t}_{0}\right) + C ′ \left(t\right)$ ${Φ}_{13} \left(t, {t}_{0}\right) = - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτds$ $\begin{matrix}{Φ}_{23} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτds \\ - C ′ \left(t\right) {\int }_{{t}_{0}}^{t} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] C \left(\hat{q} {I}_{2}^{{t}_{0}} {I}_{1}^{τ}\right) dτ\end{matrix}$ $\begin{matrix}{Φ}_{14} \left(t, {t}_{0}\right) = - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[\left(C\left(\hat{q} {I}_{2}^{τ} {I}_{1}^{τ}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτds \\ - C ′ \left(t\right) {\int }_{{t}_{0}}^{t} {\int }_{{t}_{0}}^{s} C \left(\hat{q} {I}_{1}^{τ} {I}_{1}^{{t}_{0}}\right) K \left(τ\right) dτds\end{matrix}$ $\begin{matrix}{Φ}_{24} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[\left(C\left(\hat{q} {I}_{2}^{τ} {I}_{1}^{τ}\right)\hat{a} {I}_{2}^{τ}\right)\times \right] {\int }_{{t}_{0}}^{τ} C \left(\hat{q} {I}_{1}^{μ} {I}_{1}^{τ}\right) dμdτds \\ + \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) K \left(τ\right) dτds \\ - C ′ \left(t\right) {\int }_{{t}_{0}}^{t} C \left(\hat{q} {I}_{1}^{τ} {I}_{1}^{{t}_{0}}\right) \left[\left(C\left(\hat{q} {I}_{1}^{τ} {I}_{1}^{{t}_{0}}\right)\hat{a} {I}_{2}^{⊤}\right)\times \right] {\int }_{{t}_{0}}^{τ} C \left(\hat{q} {I}_{1}^{μ} {I}_{1}^{τ}\right) dμdτ - C ′ \left(t\right) {\int }_{{t}_{0}}^{t} C \left(\hat{q} {I}_{1}^{τ} {I}_{1}^{{t}_{0}}\right) K \left(τ\right) dτ\end{matrix}$ ${Φ}_{15} \left(t, {t}_{0}\right) = C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{μ} {I}_{1}^{τ}\right) dμdτds$ $\begin{matrix}{Φ}_{25} \left(t, {t}_{0}\right) = - \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{τ} {I}_{1}^{τ}\right) dμdτds \\ + C ′ \left(t\right) {\int }_{{t}_{0}}^{t} C \left(\hat{q} {I}_{1}^{τ} {I}_{1}^{{t}_{0}}\right) \left[{\left(C\left(\hat{q} {I}_{2}^{τ} {I}_{1}^{τ}\right)\hat{a} {I}_{2}^{τ}\right)}_{\times }\right] {\int }_{{t}_{0}}^{τ} C \left(\hat{q} {I}_{2}^{μ} {I}_{1}^{τ}\right) dμdτ\end{matrix}$ ${Φ}_{16} \left(t, {t}_{0}\right) = C ′ \left(t\right) {\int }_{{t}_{0}}^{t} {\int }_{{t}_{0}}^{s} C \left(\hat{q} {I}_{1}^{τ} {I}_{1}^{{t}_{0}}\right) dτ ds$ ${Φ}_{26} \left(t, {t}_{0}\right) = - \left[\hat{ω} \times {I}_{1}^{t}\right] C ′ \left(t\right) {\int }_{{t}_{0}}^{t} {\int }_{{t}_{0}}^{s} C \left(\hat{q} {I}_{1}^{τ} {I}_{1}^{{t}_{0}}\right) dτds + C ′ \left(t\right) {\int }_{{t}_{0}}^{t} C \left(\hat{q} {I}_{1}^{τ} {I}_{1}^{{t}_{0}}\right) dτ$ ${Φ}_{17} \left(t, {t}_{0}\right) = - C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτds$ ${Φ}_{27} \left(t, {t}_{0}\right) = \left[\hat{ω} \times {I}_{1}^{t}\right] C ′ \left(t\right) {\int }_{{t}_{0}}^{t} {\int }_{{t}_{0}}^{s} C \left(\hat{q} {I}_{2}^{τ} {I}_{1}^{{t}_{0}}\right) dτds - C ′ \left(t\right) {\int }_{{t}_{0}}^{t} C \left(\hat{q} {I}_{2}^{τ} {I}_{1}^{{t}_{0}}\right) dτ ;$ ${if i = 3 , and j = 1 , 2 , 6 or 7 , then Φ}_{3 j} \left(t, {t}_{0}\right) = {0}_{3} ;$ $if i > 3 , and i \neq j , then {Φ}_{ij} \left(t ,{t}_{0}\right) = {I}_{3} ;$ and $if i > 3 , and i \neq j , then {Φ}_{ij} \left(t ,{t}_{0}\right) = {0}_{3} ,$ wherein $C " \left(t\right) = C \left(\hat{q} {I}_{2}^{{t}_{0}} {I}_{2}^{t}\right) , C ′ \left(t\right) = C \left(\hat{q} {I}_{1}^{{t}_{0}} {I}_{1}^{t}\right)$ and $K ≜ \left[\hat{ω} \times {I}_{1}\right] \left[\hat{p} {I}_{2 \times } {I}_{1}\right] + \left[{\left(\hat{ω} {I}_{1}{\times }^{{I}_{1}}{\hat{p}}_{{I}_{2}}+{2}^{{I}_{1}}{\hat{v}}_{{I}_{2}}\right)}_{\times }\right]$.

6. The method according to claim 3 or 4, wherein the discrete-time noise covariance matrix is denoted as **Q**_{*k,k*-1}, and the discrete-time noise covariance matrix is calculated by the following equation: ${Q}_{k , k - 1} = {\int }_{{t}_{k - 1}}^{{t}_{k}} Φ \left(τ\right) G \left(τ\right) {Q}_{c} {G}^{T} \left(τ\right) {Φ}^{T} \left(τ\right) dτ$ where **Φ**(*τ*) represents the discrete-time error-state transition matrix between time *τ* and time k-1, **G**(*τ*) represents the noise Jacobian matrix between time *τ* and time k-1, and **Q***_{c}* represents the continuous-time noise covariance matrix.

7. The method according to claim 3 or 4, wherein determining the discrete-time error-state transition matrix based on the state vector, the prior state vector, the first data, the second data and the first-type analytical solution comprises:
obtaining a processing result obtained by processing the first-type analytical solution according to a preset method, wherein the preset method comprises at least one of a Runge-Kutta method and a numerical approximation method; and
determining the discrete-time error-state transition matrix based on the state vector, the prior state vector, the first data, the second data and the processing result.

8. The method according to claim 1, wherein the method further comprises:
obtaining a continuous-time error-state transition matrix and observation data;
determining a discrete-time error-state transition matrix based on the continuous-time error-state transition matrix;
obtaining a noise Jacobian matrix and a continuous-time noise covariance matrix;
determining a discrete-time noise covariance matrix based on the discrete-time error-state transition matrix, the noise Jacobian matrix and the continuous-time noise covariance matrix; and
correcting the estimated state vector based on the discrete-time noise covariance matrix and the observation data,
wherein the continuous-time error-state transition matrix is denoted as F, and the continuous-time error-state transition matrix is calculated by the following equation: $F = \left[\begin{matrix}{0}_{3} & {I}_{3} & {0}_{3} & {0}_{3} & {0}_{3} & {0}_{3} & {0}_{3} \\ - U & - 2 \left[{\hat{ω}}_{1 \times }\right] & - \hat{C} \left[{\hat{a}}_{2 \times }\right] & - K & {0}_{3} & {I}_{3} & - \hat{C} \\ {0}_{3} & {0}_{3} & - \left[{\hat{ω}}_{2 \times }\right] & {\hat{C}}^{T} & - {I}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3} \\ {0}_{3} & {0}_{3} & {0}_{3} & {0}_{3} & {0}_{3} & {0}_{3} & {0}_{3}\end{matrix}\right]$ $U ≜ {\left[\hat{ω} \times {I}_{1}\right]}^{2} + \left[\dot{\hat{ω}} \times {I}_{1}\right]$ $\hat{C} ≜ C \left(\hat{q} {I}_{2} {I}_{1}\right)$ $K ≜ \left[\hat{ω} \times {I}_{1}\right] \left[\hat{p} {I}_{2 \times } {I}_{1}\right] + \left[{\left(\hat{ω} {I}_{1}{\times }^{{I}_{1}}{\hat{p}}_{{I}_{2}}+{2}^{{I}_{1}}{\hat{v}}_{{I}_{2}}\right)}_{\times }\right] .$

9. The method according to any one of claims 3, 4 and 8, wherein the observation data comprises at least one of the following:
a preset observed relative position between the second device and the first device;
data obtained by observing the first device and the second device through a target sensor, the target sensor being of a different type from the inertial measurement units; and
the first data collected by the first inertial measurement unit and the second data collected by the second inertial measurement unit.

10. The method according to any one of claims 1 to 4 and 8, wherein the first equation defines a relationship between a result of differentiating the relative velocity between the first device and the second device, and a target difference, wherein the target difference refers to a difference obtained by subtracting a Coriolis acceleration and a convected acceleration from a reference relative acceleration, wherein the reference relative acceleration is associated with the relative attitude between the first device and the second device, a first corrected acceleration, and a second corrected acceleration; the first corrected acceleration is a difference between an acceleration measured by the first inertial measurement unit and the acceleration bias of the first inertial measurement unit; the second corrected acceleration is a difference between an acceleration measured by the second inertial measurement unit and the acceleration bias of the second inertial measurement unit; the Coriolis acceleration is associated with a corrected angular velocity and the relative velocity between the first device and the second device; the corrected angular velocity is a difference between an angular velocity measured by an inertial measurement unit corresponding to the reference coordinate system and the angular velocity bias of the inertial measurement unit; and the convected acceleration is associated with the corrected angular velocity, the relative position between the first device and the second device, and a result of differentiating the corrected angular velocity.

11. The method according to any one of claims 1-4 and 8, wherein the inertial measurement unit corresponding to the reference coordinate system is the first inertial measurement unit, and the first equation comprises: $\begin{matrix}\dot{\hat{v}} {I}_{2} {I}_{1} \left(t\right) = C \left(\hat{q} {I}_{2} {I}_{1}\left(t\right)\right) \hat{a} {I}_{2} \left(t\right) - \hat{a} {I}_{1} \left(t\right) \\ - 2 \hat{ω} {I}_{1} \left(t\right) \times \hat{v} {I}_{2} {I}_{1} \left(t\right) \\ - \hat{ω} {I}_{1} \left(t\right) \times \left(\hat{ω} {I}_{1}\left(t\right)\times \hat{p} {I}_{2} {I}_{1}\left(t\right)\right) - \dot{\hat{ω}} {I}_{1} \left(t\right) \times \hat{p} {I}_{2} {I}_{1} \left(t\right) .\end{matrix}$

12. The method according to any one of claims 1-4 and 8, wherein the inertial measurement unit corresponding to the reference coordinate system is the first inertial measurement unit, and the second equation comprises: $\dot{\hat{p}} {I}_{2} {I}_{1} \left(t\right) {=}^{{I}_{1}} \hat{v} {′}_{{I}_{2}} \left(t\right) {-}^{{I}_{1}} \hat{ω} \left(t\right) {\times }^{{I}_{1}} {\hat{p}}_{{I}_{2}} \left(t\right)$ $\dot{v} {I}_{1} {′}_{{I}_{2}} \left(t\right) = C {\left(\hat{q} {I}_{2} {I}_{1}\left(t\right)\right)}^{{I}_{2}} â \left(t\right) {-}^{{I}_{1}} â \left(t\right) {-}^{{I}_{1}} \hat{ω} \left(t\right) {\times }^{{I}_{1}} \hat{v} {′}_{{I}_{2}} \left(t\right) ,$ where ^{*I*₁}**v̂'**_{*I*₂}(t) represents the projection result obtained by projecting the relative velocity between the second device and the first device in the inertial coordinate system to the reference coordinate system.

13. The method according to any one of claims 1 to 4 and 8, wherein determining an estimated state vector based on the state vector, the first data, the second data and the state estimation equation comprises:
obtaining a second-type analytical solution determined based on the state estimation equation and a preset method, wherein the preset method comprises at least one of a Runge-Kutta method, and a numerical approximation method, and the second-type analytical solution refers to an analytical solution of parameters in the estimated state vector; and
determining the estimated state vector based on the state vector, the first data, the second data, and the second-type analytical solution.

14. An electronic device, comprising:
a memory configured to store a computer program product; and
a processor configured to execute the computer program product stored in the memory, wherein the computer program product, when executed, implements the method for state estimation according to any one of claims 1 to 13.

15. A computer-readable storage medium having computer program instructions stored thereon, wherein the computer program instructions, when executed by a processor, implement the method for state estimation according to any one of claims 1 to 13.
